# EUROPEAN PATENT APPLICATION

(11) **EP 4 844 478 A1**
(43) Date of publication of application: **25.11.2026**
(21) Application number: 26180773.9
(22) Date of filing: 22.05.2026
(51) Int. Cl.: G02F 1/225, G02F 1/21

(54) **MANAGING DIFFERENTIAL ELECTRO-OPTIC MODULATORS**

(30) Priority: 22.05.2025 US 202563810671 P
(71) Applicant: Marvell Asia Pte Ltd, Singapore 369522 (SG)
(72) Inventor: TANG, Hanzhi, 550332 Singapore (SG); TU, Xiaguang, 165004 Singapore (SG); WANG, Wanjun, 644517 Singapore (SG); MAO, Deng, Ottawa, ON, K2B 7J6 (CA); LIN, Jie, Santa Clara, CA, 95051 (US)
(74) Representative: Fish & Richardson P.C.

(57) **Abstract**

An electro-optic (EO) modulator includes: a modulation section configured to modulate a first guided light by a first electrical field and a second guided light by a second electrical field; and a booster section configured to generate a first positive phase modulation for the first guided light by the first electrical field, a first negative phase modulation for the first guided light by a third electrical field, a second positive phase modulation for the second guided light by the second electrical field, and a second negative phase modulation for the second guided light by a fourth electrical field. The booster section is configured to cause at least one of the third electrical field to be different from the second electrical field or the fourth electrical field to be different from the first electrical field. The EO modulator can be a Thin-Film Lithium Niobate (TFLN) Mach-Zehnder modulator (MZM).

## Description

### CROSS-REFERENCE TO RELATED APPLICATION

This application claims priority to U.S. Provisional Patent Application Serial No. 63/810,671 filed on May 22, 2025, the entire content of which is hereby incorporated by reference.

### TECHNICAL FIELD

The present disclosure is related to electro-optic modulators.

### BACKGROUND

Demands for artificial intelligence (AI) computing, such as machine learning (ML) and deep learning (DL), are increasing faster than they can be met by increases in available processing capacity. This rising demand and the growing complexity of AI models drive the need to connect many chips into a system where the chips can send data between each other with low latency and at high speed. High data rate communication has been widely implemented via optical network, in which data signals are carried by laser light that can be modulated using electro-optic modulators.

### SUMMARY

The present disclosure describes methods, devices, systems and techniques for managing differential electro-optic modulators, e.g., differential electro-optic (EO) Mach-Zehner modulators (MZM) such as Thin-film lithium niobate (TFLN) MZMs.

One aspect of the present disclosure features an electro-optic modulator, including: a modulation section including a first modulation waveguide and a second modulation waveguide, the first modulation waveguide being configured to modulate first guided light by a first electrical field during operation of the electro-optic modulator and the second modulation waveguide being configured to modulate second guided light by a second electrical field during operation of the electro-optic modulator; and a booster section coupled to the modulation section, where a booster of the booster section includes: a first aligned waveguide configured to generate a first positive phase modulation for the first guided light by the first electrical field, a first inverted waveguide configured to generate a first negative phase modulation for the first guided light by a third electrical field, a second aligned waveguide configured to generate a second positive phase modulation for the second guided light by the second electrical field, and a second inverted waveguide configured to generate a second negative phase modulation for the second guided light by a fourth electrical field, where the booster is configured to cause, during operation of the electro-optic modulator, at least one of the third electrical field to be different from the second electrical field or the fourth electrical field to be different from the first electrical field, and where the first modulation waveguide, the second modulation waveguide, the first aligned waveguide and the first inverted waveguide, and the second aligned waveguide and the second inverted waveguide, include an electro-optic (EO) material.

Another aspect of the present disclosure features an electro-optic modulator, including: a modulation section configured to modulate a first guided light by a first electrical field and a second guided light by a second electrical field; and a booster section coupled to the modulation section and configured to: generate a first positive phase modulation for the first guided light by the first electrical field, generate a first negative phase modulation for the first guided light by a third electrical field, generate a second positive phase modulation for the second guided light by the second electrical field, and generate a second negative phase modulation for the second guided light by a fourth electrical field, where the booster section is configured to cause at least one of the third electrical field being different from the second electrical field or the fourth electrical field being different from the first electrical field.

Another aspect of the present disclosure features a system, including: an optical source configured to provide an optical signal; and an electro-optic (EO) modulator coupled to the optical source, where the EO modulator is the EO modulator as described in the present disclosure. Other aspects of the present disclosure features a method for forming the EO modulator as described in the present disclosure, and a method for operating the EO modulator as described in the present disclosure.

The details of one or more implementations of the subject matter of this specification are set forth in the Detailed Description, the Claims, and the accompanying drawings. Other features, aspects, and advantages of the subject matter will become apparent to those of ordinary skill in the art from the Detailed Description, the Claims, and the accompanying drawings.

### BRIEF DESCRIPTION OF THE DRAWINGS

FIG. 1 illustrates an example electro-optic (EO) Mach-Zehnder modulator (MZM) including a modulation section and a booster section having one or more bandwidth boosters.
FIGS. 2A-2D illustrate an example differential EO MZM with ground-source-ground-source-ground (GSGSG) configuration, including a modulation section (FIG. 2A), a booster (FIG. 2B), example electrodes and waveguides (FIG. 2C), and cross-sections of the booster at different positions (FIG. 2D).
FIGS. 3A-3C illustrate another example differential EO MZM with ground-source-source-ground (GSSG) configuration, including a modulation section (FIG. 3A), a booster (FIG. 3B), and example electrodes and waveguides (FIG. 3C).
FIG. 4A illustrates relationships between gain over frequency and lengths of aligned segment and inverted segment in a booster.
FIG. 4B illustrates relationships between EO response over frequency and lengths of aligned segment and inverted segment in a booster.
FIGS. 5A-5B illustrate example folded layouts for MZM: symmetrical (FIG. 5A) and asymmetrical (FIG. 5B).

Like reference numbers and designations in the various drawings indicate like elements. The components shown here, their connections and relationships, and their functions, are meant to be examples only, and are not meant to limit the implementations described and/or claimed in this document.

### DETAILED DESCRIPTION

Advancements in generative AI and large language models are driving exponential increases in data transfer capacity for both data centers and emerging AI clusters. To meet this demand, optical interconnect devices are rapidly evolving. A key building block for optical interconnect is electro-optic (EO) Mach-Zehnder modulators (MZM), which encode the electrical data to optical carrier for transmission. Thin-film lithium niobate (TFLN) MZM, leveraging the Pockels effect for high intrinsic modulation bandwidth, are promising candidates for high speed optical interconnects. The performance of TFLN MZM may be constrained by a trade-off between a switching voltage (e.g., half-wave voltage) Vπ and modulation bandwidth. The switching voltage Vπ is a voltage required for an MZM to switch from a maximum transmission to a minimum transmission with a π-phase shift. Achieving high EO bandwidth with low switching voltage Vπ simultaneously is desirable for high data rate transmission.

Implementations of the present disclosure provide methods, devices, systems and techniques for managing differential electro-optic modulators, e.g., differential electro-optic (EO) Mach-Zehner modulators (MZM) such as Thin-film lithium niobate (TFLN) MZMs, which can achieve high data rate transmission, e.g., for over 400 Gbps per lane optical interconnects.

In some implementations, an electro-optic (EO) modulator includes: a modulation section and a booster section coupled to the modulation section. The modulation section includes a first modulation waveguide configured to modulate a first guided light by a first electrical field and a second modulation waveguide configured to modulate a second guided light by a second electrical field. The booster section includes one or more boosters that are arranged sequentially. A booster of the booster section includes: a first aligned segment including a first aligned waveguide configured to generate a first positive phase modulation for the first guided light by the first electrical field, a first inverted segment including a first inverted waveguide configured to generate a first negative phase modulation for the first guided light by a third electrical field, a second aligned segment including a second aligned waveguide configured to generate a second positive phase modulation for the second guided light by the second electrical field, and a second inverted segment including a second inverted waveguide configured to generate a second negative phase modulation for the second guided light by a fourth electrical field. The booster is configured to cause at least one of the third electrical field to be different from the second electrical field or the fourth electrical field to be different from the first electrical field. The first modulation waveguide, the second modulation waveguide, the first aligned waveguide and the first inverted waveguide, and the second aligned waveguide and the second inverted waveguide, include an electro-optic (EO) material. Each of the electrical fields, e.g., the first electrical field, the second electrical field, the third electrical field, and the fourth electrical field, can be generated by a corresponding voltage applied at corresponding electrodes.

The subject matter described in this specification can be implemented to realize one or more of the following technical advantages, effects and/or benefits. For example, first, the EO modulator disclosed herein can be configured as a differential EO MZM (e.g., a thin-film lithium niobate (TFLN) MZM) incorporating one or more bandwidth boosters, which can improve the EO modulation bandwidth without sacrificing the switching voltage. Consequently, the EO modulator can overcome the traditional physical trade-off between the switching voltage and the modulation bandwidth, and can enable a substantial increase in EO bandwidth (e.g., exceeding 140 GHz), which is capable of supporting ultra-high-speed optical transceivers operating at over 400 Gbps per lane.

Second, the EO modulator uses a frequency domain equalizer (e.g., a combination of aligned segment and inverted segment) to introduce high-frequency gain and extend the EO bandwidth and a polarity converter optically transmitting a guided light from the aligned segment to the inverted segment, advantageously avoiding the complex lithium niobate (LN) waveguide crossings typically required for phase flipping.

Third, the EO modulator can be configured to achieve and maintain precise impedance and velocity matching across all sections, thereby guaranteeing no radio-frequency (RF) reflection and pulse broadening. For example, the polarity converter can include a curved silicon or silicon nitride (SiN) waveguide with tapered ends, allowing for active tuning of an optical delay by tuning the silicon or SiN waveguide ratio, which facilitates the velocity matching between the guided light propagating along a corresponding waveguide and an electrical signal traveling along one or more adjacent electrodes. Moreover, the electrodes can be structurally configured, e.g., utilizing a T-rail, corrugated, or periodically loaded structure and/or multiple layers of metal electrodes and/or micro capacitors and/or micro inductors to form a highly tunable transmission line, to simultaneously match the velocity of the electrical signal to the velocity of the guided light and provide a characteristic impedance (e.g., 50 Ohm) matched to other sections of the modulator, an external electrical source or driving circuit. Further, the EO modulator can use TFLN material for modulation with double-ended drive electrodes, rendering it compatible with the high-speed RF (radio frequency) drivers required for high-baud-rate intensity-modulation direct-detection (IM-DD) and coherent optical transceivers.

Fourth, the EO modulator can utilize a folded MZM layout (which may be symmetrical or asymmetrical) to accommodate the additional modulator length necessitated by the bandwidth boosters. This folded architecture successfully mitigates chip-size constraints and provides a robust design suitable for mass production in commercial foundries. The EO modulator can be seamlessly integrated with a silicon photonics platform to form a highly integrated optical engine.

Fifth, to improve the modulation bandwidth, the EO modulator disclosed herein can utilize a standard semiconductor substrate (e.g., silicon) without requiring substrate modifications or alternative dielectric materials (e.g., quartz or glass) to mitigate electrical signal loss. This architecture ensures full compatibility with large-scale commercial foundries and leverages mature semiconductor fabrication processes for high-volume production. Additionally, the EO modulator eliminates the need for silicon undercutting to reduce electrical signal loss, thereby significantly increasing the overall mechanical stability and robustness of the device. The techniques implemented herein offer flexible and practical designs for high-speed EO MZMs, promising for next-generation 400G/lane optical transceivers.

For illustration purposes, a differential EO MZM is described in the present disclosure as an example of the EO modulator. As used herein, the term 'guided light' may refer to a guided mode, a guided optical wave, or an optical signal propagating in a medium such as a waveguide. The techniques disclosed herein can be applied to any other types of EO modulators, or any suitable electro-optic or optical devices or systems for improving high bandwidth response and/or velocity matching and/or impedance matching.

The following detailed description is presented to enable any person skilled in the art to make and use the disclosed subject matter in the context of one or more particular implementations. Various modifications, alterations, and permutations of the disclosed implementations can be made and will be readily apparent to those of ordinary skill in the art, and the general principles defined can be applied to other implementations and applications, without departing from the scope of the present disclosure. In some instances, one or more technical details that are unnecessary to obtain an understanding of the described subject matter and that are within the skill of one of ordinary skill in the art may be omitted so as to not obscure one or more described implementations. The present disclosure is not intended to be limited to the described or illustrated implementations, but to be accorded the widest scope consistent with the described principles and features.

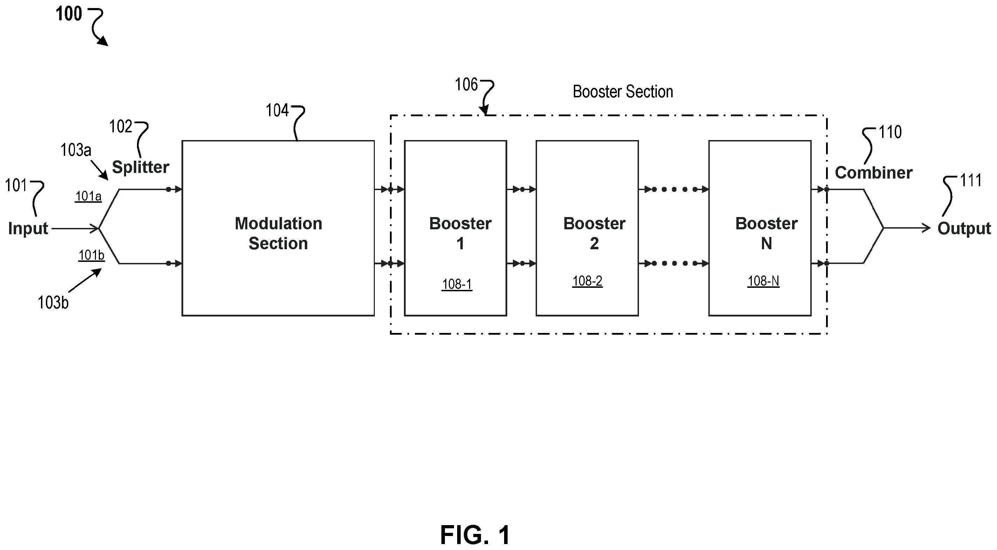

FIG. 1 illustrates an example electro-optic (EO) Mach-Zehnder modulator (MZM) 100 including a modulation section and a booster section having one or more bandwidth boosters. The MZM 100 can be configured as a differential EO MZM to improve EO modulation bandwidth without sacrificing a switching voltage Vπ.

In some implementations, as shown in FIG. 1, the MZM 100 includes an optical splitter 102, a modulation section 104, a booster section 106, and an optical combiner 110 that are sequentially arranged along optical paths.

The optical splitter 102 can be configured to split an input optical signal 101 into a first guided light 101a and a second guided light 101b. The input optical signal 101 can be a laser light from a laser source. The laser source can be a fiber laser. The laser light can have a wavelength, e.g., within but not limited to a range of 1300 nm to 1550 nm such as 1310 nm. In the MZM 100, the first guided light 101a propagates along a first optical path 103a and the second guided light 101b propagates along a second optical path 103b.

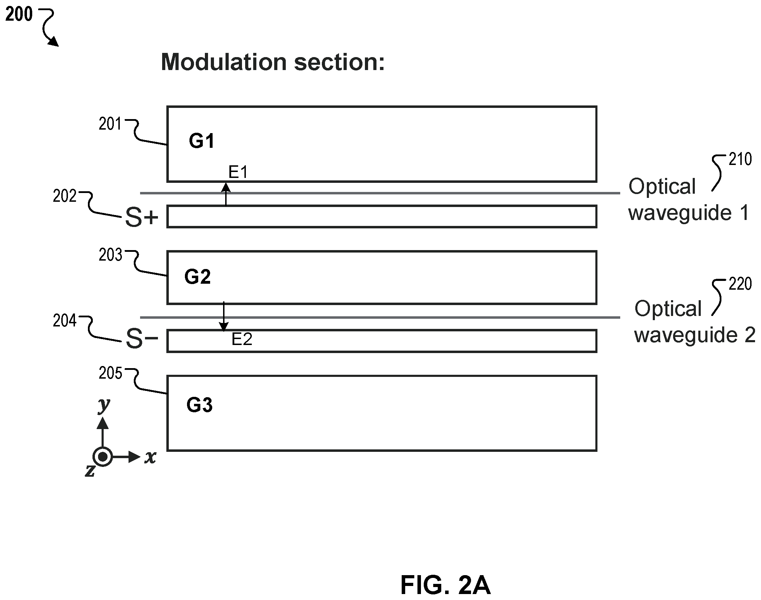

The modulation section 104 is coupled to the optical splitter 102 and can be configured to receive the first guided light 101a into a first modulator arm along the first optical path 103a and the second guided light 101b into a second modulator arm along the second optical path 103b. As described with further details below, e.g., FIGS. 2A to 5B, the modulation section 104 and the booster section 106 can be formed on a substrate. The substrate can be a semiconductor substrate such as silicon substrate, or a glass or quartz substrate. The modulation section 104 can include a first modulation waveguide in the first modulator arm and a second modulation waveguide in the second modulator arm. In some implementations, the optical splitter 102 can output the first guided light 101a (e.g., via a first optical fiber) into the first modulation waveguide in the modulation section 104 and the second guided light 101b (e.g., via a second optical fiber) into the second modulation waveguide in the modulation section 104.

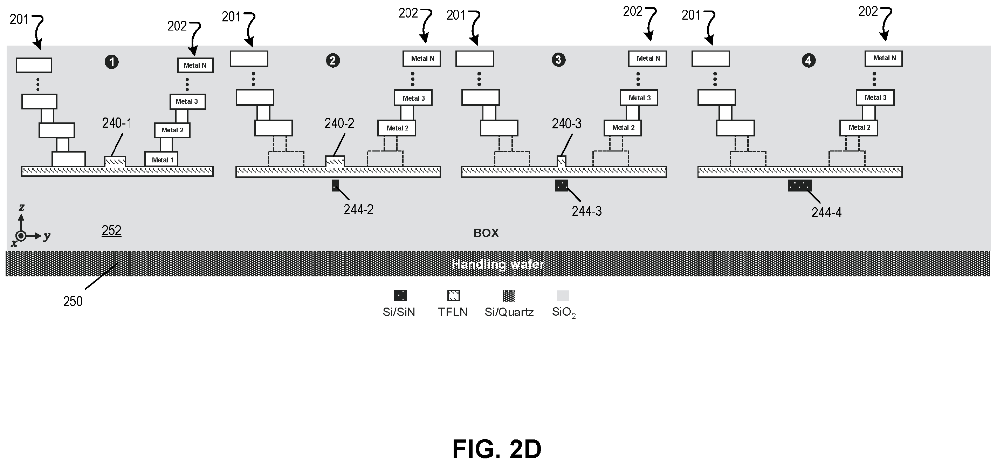

The first modulation waveguide and the second modulation waveguide can include an EO material, e.g., thin-film lithium niobate (TFLN), barium titanate (BTO), or EO polymer. In some examples, each of the first modulation waveguide and the second modulation waveguide includes a ridge structure formed in a Thin-Film Lithium Niobate (TFLN) layer, e.g., as illustrated with further details in FIG. 2D.

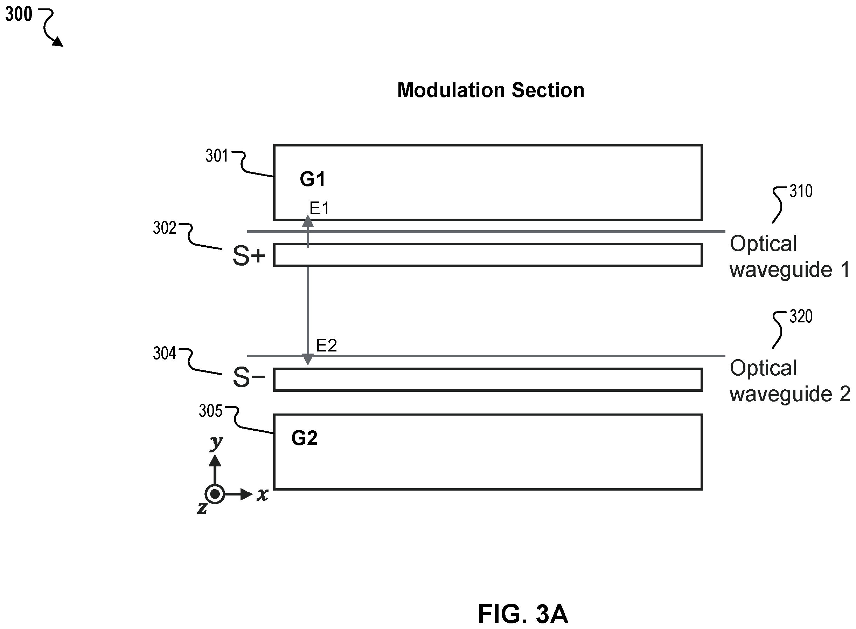

The modulation section 104 can be configured to provide a fundamental modulation strength with a switching voltage Vπ, e.g., by modulating phases of the first and second guided light 101a, 101b in the first and second modulation arms due to EO effect. As described with further details below, e.g., in FIG. 2A or 3A, the first modulation waveguide can be configured to modulate the first guided light 101a by a first electrical field, and the second modulation waveguide can be configured to modulate the second guided light 101b by a second electrical field. The first electrical field can be generated by applying a first bias voltage to a first source electrode (e.g., S+) and a first ground voltage (e.g., 0) to a ground electrode (G1), while the first source electrode and the first ground electrode are electrically coupled to two opposite sides of the first modulation waveguide. The second electrical field can be generated by applying a second bias voltage to a second source electrode (e.g., S-) and the ground voltage to a second ground electrode (G2), while the second source electrode and the second ground electrode are electrically coupled to two opposite sides of the second modulation waveguide. In some examples, the first bias voltage is a positive voltage, and the second bias voltage is a negative voltage. The first bias voltage and the second bias voltage can have a same magnitude but with opposite polarities.

The booster section 106 is coupled to the modulation section 104, and can be configured to provide substantially no gain at lower frequencies and positive gains at higher frequencies to thereby enhance an overall EO bandwidth of the MZM 100. As illustrated in FIG. 1, the booster section 106 can include one or more boosters 108-1, 108-2,..., 108-N (referred to generally as boosters 108 and individually as booster 108). The one or more boosters 108 can be coupled in series between the modulation section 104 and the optical combiner 110. Each booster 108 can include: a first part for the first modulation arm or along the first optical path 103a and a second part for the second modulation arm or along the second optical path 103b.

For each modulation arm or along each optical path 103a, 103b, the booster 108 can include a frequency domain equalizer (e.g., a combination of aligned segment and inverted segment) to introduce a high-frequency gain and extend the EO bandwidth and a polarity converter optically transmitting a guided light from the aligned segment to the inverted segment, advantageously avoiding the complex lithium niobate (LN) waveguide crossings required for phase flipping. The aligned segment can include an aligned waveguide, and the inverted segment can include an inverted waveguide. The aligned waveguide and the inverted waveguide can include the EO material. The polarity converter can include a conversion waveguide that can include a waveguide material different from the EO material. For example, the waveguide material can include silicon (Si) or silicon nitride (SiN). The conversion waveguide can include a silicon-on-insulator (SOI) structure or a silicon nitride-on-insulator structure, e.g., as illustrated with further details in FIG. 2D.

In some implementations, in the first part of the booster 108, a first alignment segment includes a first aligned waveguide configured to generate a first positive phase modulation for the first guided light 101a by the first electrical field, a first inverted segment includes a first inverted waveguide configured to generate a first negative phase modulation for the first guided light 101a by a third electrical field, and a first polarity converter includes a first conversion waveguide optically coupled between the first aligned waveguide and the first inverted waveguide and configured to transmit the first light beam from the first aligned waveguide to the first inverted waveguide. In the second part of the booster 108, a second alignment segment includes a second aligned waveguide configured to generate a second positive phase modulation for the second guided light 101b by the second electrical field, a second inverted segment includes a second inverted waveguide configured to generate a second negative phase modulation for the second guided light 101b by a fourth electrical field, and a second polarity converter includes a second conversion waveguide optically coupled between the second aligned waveguide and the second inverted waveguide and configured to transmit the second guided light from the second aligned waveguide to the second inverted waveguide.

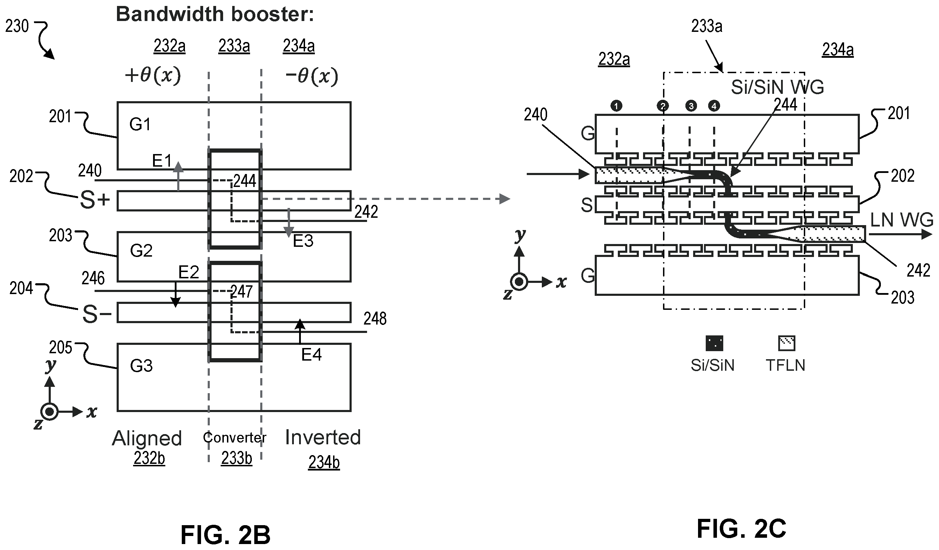

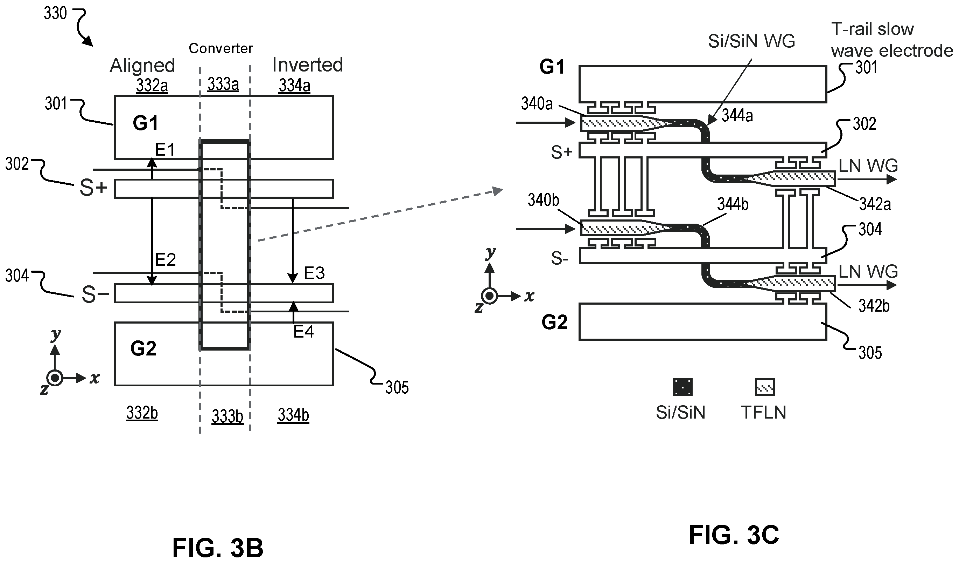

The booster 108 can be configured to cause at least one of the third electrical field being different from the second electrical field or the fourth electrical field being different from the first electrical field, e.g., as illustrated with further details in FIGS. 2B-2C or FIGS. 3B-3C. A sum of the first positive phase modulation and the first negative phase modulation can be substantially identical to zero at a lower frequency and be greater than zero at a higher frequency. A sum of the second positive phase modulation and the second negative phase modulation can be substantially identical to zero at the lower frequency and can be greater than zero at the higher frequency. In such a way, the bandwidth of EO response of the MZM 100 can be enhanced. Further, this configuration can avoid complex lithium niobate (LN) waveguide crossings required for phase flipping.

As described with further details below, e.g., in FIGS. 2B-2C or FIGS. 3B-3C, the booster 108 (e.g., the first polarity converter and/or the second polarity converter) can be configured to tune an optical delay of a corresponding guided light (e.g., 101a, 101b) for velocity matching between the corresponding guided light along a corresponding waveguide and an electrical signal traveling along one or more electrodes adjacent to the corresponding waveguide. In some examples, the optical delay of the corresponding guided light can be tuned by tuning a length ratio of Si/SiN waveguide structure. The one or more electrodes can be structurally configured to simultaneously velocity-match the electrical signal to the corresponding guided light and provide a characteristic impedance matched to an external electrical source. In some examples, at least one of the one or more electrodes includes a T-rail structure, or a corrugated or periodically loaded structure, e.g., as illustrated in FIG. 2C or 3C. In some examples, the one or more electrodes can be structurally configured to have multiple layers of metal electrodes to form a high performance transmission line, e.g., as illustrated in FIG. 2D, for velocity matching and impedance matching. In some cases, the T-rail slow wave electrode designs can be put on different metal layers to achieve impedance matching with the modulation section 104 and velocity matching with optical waveguides.

The optical combiner 110 can be coupled to the booster section 106 and configured to combine the first guided light 101a and the second guided light 101b transmitted through the modulation section 104 and the booster section 106 to generate an output guided light 111. Each booster 108 in the booster section 106 can be configured to increase a response bandwidth of the output guided light 111. The MZM 100 can be configured such that the output guided light 111 includes an optical signal modulated in magnitude with a modulation format. The modulation format can be selected from a group of non-return-to-zero (NRZ), PAM4, PAM8, PAM16, PAM 64, BPSK, QPSK, DPSK, DQPSK, 8QAM, 16QAM, and 64QAM. In some examples, the MZM 100 can be configured to provide an EO bandwidth of over 140 GHz, which can support ultra-high-speed data transmission rates of 400 Gbps per lane utilizing a four-level pulse magnitude modulation (PAM4) signaling format.

FIGS. 2A-2D illustrate an example differential EO MZM with ground-source-ground-source-ground (GSGSG) configuration. The MZM can include a modulation section 200 (as illustrated in FIG. 2A) and a booster 230 (as illustrated in FIGS. 2B-2C). The EO MZM can be implemented in the MZM 100 of FIG. 1. The modulation section 200 can be same as or similar to the modulation section 104 of FIG. 1. The booster 230 can be same as or similar to the booster 108 of FIG. 1.

FIG. 2A illustrates a top view of the modulation section 200 in the MZM. As noted above, the modulation section 200 can include a first modulation waveguide 210 (in a first modulation arm) configured to modulate a first guided light (e.g., 101a of FIG. 1) by a first electrical field E1 and a second modulation waveguide 220 (in a second modulation arm) configured to modulate a second guided light (e.g., 101b of FIG. 1) by a second electrical field E2. The first guided light propagates along a first optical path (e.g., 103a of FIG. 1), and the second guided light propagates along a second optical path (e.g., 103b of FIG. 1).

As shown in FIG. 2A, the MZM can have a ground-source-ground-source-ground (GSGSG) configuration for electrodes, including a first ground electrode (G1) 201, a first source electrode (S+) 202, a second ground electrode (G2) 203, a second source electrode (S-) 204, and a third ground electrode (G3) 205. These electrodes 201-205 extend along a first direction (e.g., X direction), and are sequentially arranged along a second direction (e.g., Y direction) intersecting with (e.g., perpendicular to) the first direction. The first ground electrode (G1) 201 and the first source electrode (S+) 202 are configured to be biased to generate the first electrical field E1, and are respectively coupled to opposite sides of the first modulation waveguide 210. The second ground electrode (G2) 203 and the second source electrode (S-) 204 are configured to be biased to generate the second electrical field E2, and are respectively coupled to opposite sides of the second modulation waveguide 220. The first ground electrode (G1) 201, the second ground electrode (G2) 203, and the third ground electrode (G3) 205 are commonly coupled to a ground. The first source electrode (S+) 202 is configured to be biased by a first bias voltage relative to the ground, and the second source electrode (S-) 204 is configured to be biased by a second bias voltage relative to the ground. The first bias voltage and the second bias voltage are equal in value but alternative in polarity. For example, the first bias voltage can be + 1 V, and the second bias voltage can be - 1 V. The first electrical field and the second electrical field can have a same magnitude but with different polarities or directions, e.g., as shown in FIG. 2A.

FIG. 2B illustrates a schematic diagram of the booster 230 of the MZM. As noted above, the booster 230 can include a first part for a first modulation arm or along the first optical path and a second part for the second modulation arm or along the second optical path. The first part of the booster 230 includes: a first alignment segment 232a including a first aligned waveguide 240 configured to generate a first positive phase modulation (e.g., + *θ*a(x)) for the first guided light by the first electrical field E1, a first inverted segment 234a including a first inverted waveguide 242 configured to generate a first negative phase modulation (e.g., - *θ*a(x)) for the first guided light by a third electrical field E3, and a first polarity converter 233a includes a first conversion waveguide 244 optically coupled between the first aligned waveguide 240 and the first inverted waveguide 242 and configured to transmit the first light beam from the first aligned waveguide 240 to the first inverted waveguide 242. The parameter x can represent a length of the first aligned waveguide 240 or a length of the first inverted waveguide 242.

Similarly, the second part of the booster 230 includes: a second alignment segment 232b including a second aligned waveguide 246 configured to generate a second positive phase modulation (e.g., + *θ*b(x)) for the second guided light by the second electrical field E2, a second inverted segment 234b including a second inverted waveguide 248 configured to generate a second negative phase modulation (e.g., - *θ*b(x)) for the second guided light by a fourth electrical field E4, and a second polarity converter 233b includes a second conversion waveguide 247 optically coupled between the second aligned waveguide 246 and the second inverted waveguide 248 and configured to transmit the second guided light from the second aligned waveguide 246 to the second inverted waveguide 248. The parameter x can represent a length of the second aligned waveguide 246 or a length of the second inverted waveguide 248. Along the first optical path of the first guided light, an effective length of the first aligned waveguide 240 is identical to an effective length of the first inverted waveguide 242. Along the second optical path of the second guided light, an effective length of the second aligned waveguide 246 is identical to an effective length of the second inverted waveguide 248. An effective length can be a physical length.

In some implementations, each of the waveguides in the modulation section 200, e.g., the first modulation waveguide 210 and the second modulation waveguide 220, and aligned/inverted waveguides in the booster 230 (or in the booster section like 106 of FIG. 1), e.g., the first aligned waveguide 240, the first inverted waveguide 242, the second aligned waveguide 246, and the second inverted waveguide 248, can includes include an EO material, e.g., thin-film lithium niobate (TFLN), barium titanate (BTO), or EO polymer. The waveguide can have a ridge structure formed in a Thin-Film Lithium Niobate (TFLN) layer, e.g., as illustrated in FIG. 2D. The first conversion waveguide 244 and/or the second conversion waveguide 247 can include a waveguide material different from the EO material. The waveguide material includes silicon (Si) or silicon nitride (SiN). In some examples, the first conversion waveguide 244 and/or the second conversion waveguide 247 can include a silicon-on-insulator (SOI) structure or a silicon nitride-on-insulator structure.

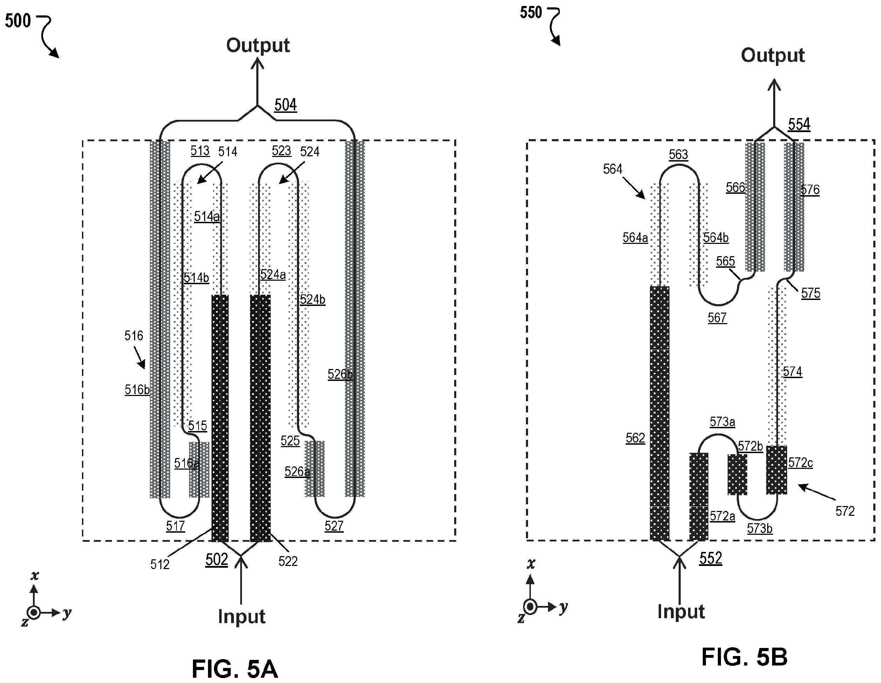

In some implementations, the modulation section 200 and the booster 230 can be directly connected together. At least part of the first modulation waveguide 210 and the first aligned waveguide 240 can be a single waveguide with the first aligned waveguide 240 as an end. At least part of the second modulation waveguide 220 and the second aligned waveguide 246 can be a single waveguide with the second aligned waveguide 246 as an end, e.g., as illustrated in FIG. 5A or 5B. In some implementations, the modulation section 200 and the booster 230 are separated with a connector (e.g., a silicon waveguide) therebetween. The connector can optically couple the modulation section 200 to the booster 230. For example, the connector can be a waveguide configured to transmit the first guided light from the first modulation waveguide 210 to the first aligned waveguide 240, or to transmit the second guided light from the second modulation waveguide 220 to the second aligned waveguide 246.

As illustrated in FIG. 2B, as the third electrical field E3 is formed between the first source electrode (S+) 202 and the second ground electrode (G2) 203, and the second electrical field E2 is formed between the second ground electrode (G2) 203 and the second source electrode (S-) 204, the third electrical field E3 can be different from the second electrical field E2, e.g., with a different configuration of electrodes and/or a different magnitude. Similarly, as the fourth electrical field E4 is formed between the second source electrode (S-) 204 and the third ground electrode (G3) 205, and the first electrical field E1 is formed between the first ground electrode (G1) 201 and the first source electrode (S+) 202, the fourth electrical field E4 can be different from the first electrical field E1, e.g., with a different configuration of electrodes and/or a different magnitude.

A positive modulation effect (e.g., represented by positive phase modulation + *θ*(x)) in an aligned segment positively contributes to the overall modulation of the MZM, whereas a negative modulation effect (e.g., represented by negative phase modulation - *θ*(x)) in a corresponding inverted segment has a negative contribution. At low frequencies, the positive modulation effect and the negative modulation effect, e.g., +*θ*(*x*) and -(*x*), can fully cancel each other out, resulting in no gain. As the frequency increases, microwave loss (or RF loss) during propagation also increases. Consequently, the positive modulation effect, e.g., *+θ*(*x*), becomes stronger than the negative modulation effect, -*θ*(*x*), leading to positive gain at higher frequencies and enhancing the EO bandwidth. For example, a sum of the first positive phase modulation (e.g., + *θ*a(x)) and the first negative phase modulation (e.g., - *θ*a(x)) can be substantially identical to zero at a lower frequency and be greater than zero at a higher frequency, and a sum of the second positive phase modulation (e.g., + *θ*b(x)) and the second negative phase modulation (e.g., - *θ*b(x)) can be substantially identical to zero at the lower frequency and be greater than zero at the higher frequency. In such a way, the bandwidth of EO response of the MZM can be enhanced.

Further, the booster 230 (e.g., the first polarity converter 233a and/or the second polarity converter 233b) can be configured to tune an optical delay of a corresponding guided light for velocity matching between the corresponding guided light along a corresponding waveguide and an electrical signal traveling along one or more electrodes adjacent to the corresponding waveguide. The one or more electrodes can be structurally configured to simultaneously velocity-match the electrical signal to the corresponding guided light and provide a characteristic impedance matched to an external electrical source (or a RF driving circuit) or the modulation section 200.

FIG. 2C is a schematic diagram illustrating an example of the first part of the booster 230, and FIG. 2D illustrates cross-section views of the booster 230 at different positions of the first part. Note that the second part of the booster 230 can have a configuration similar to the first part, e.g., as illustrated in FIG. 2B.

Each of the first aligned waveguide 240 and the first inverted waveguide 242 extends along the first direction (e.g., X direction) and has first and second opposite sides along the second direction (e.g., Y direction), e.g., as illustrated in FIG. 2C. The first aligned waveguide 240 and the first inverted waveguide 242 can be offset along the first direction and also along the second direction. Each of the first aligned waveguide 240 and the first inverted waveguide 242 can have a ridge structure formed in a Thin-Film Lithium Niobate (TFLN) layer, e.g., as illustrated in FIG. 2D. The first ground electrode (G1) 201 is coupled to a first side of the first aligned waveguide 240, and a first side of the first source electrode (S+) 202 is coupled to a second side of the first aligned waveguide 240. A second side of the first source electrode (S+) 202 is coupled to a first side of the first inverted waveguide 242, and a first side of the second ground electrode (G2) 203 is coupled to a second side of the first inverted waveguide 242.

Each of the electrodes 201, 202, 203 can include a series of metal contacts along the first direction. Metal contacts coupled to the first aligned waveguide 240 and metal contacts coupled to the first inverted waveguide 242 can be offset along the first direction. The metal contacts can be configured to provide more degrees of freedom to simultaneously achieve impedance and velocity matching. For example, the metal contacts can have a T-rail slow wave design, e.g., as illustrated in FIG. 2C, or a corrugated or periodically loaded structure with micro capacitors or micro inductors. In some implementations, each of the electrodes 201, 202, 203 can have a stacked structure including multiple layers of metal electrodes that are connected in series through vias along a third direction (e.g., Z direction) perpendicular to the first direction and the second direction, e.g., as illustrated in FIG. 2D. A first layer of metal electrode closer to a corresponding waveguide, e.g., 240 or 242, than a second layer of metal electrode along the third direction is closer to the corresponding waveguide than the second layer of metal electrode along the second direction. For example, as illustrated in FIG. 2D, metal 1 is the closet layer of metal electrode coupled to the first aligned waveguide 240 along the second direction, and is also the closet layer of metal electrode coupled to the first aligned waveguide 240 along the third direction. The multiple layers of metal electrodes can be configured to form the transmission line to match impedance and velocity. Further, at least one of the multiple layers of metal electrodes can have a T-rail, corrugated, or periodically loaded structure.

As illustrated in FIG. 2C, different from waveguide crossing, the first conversion waveguide 244 extends along a curved path (e.g., a bended waveguide) between the first aligned waveguide 240 to the first inverted waveguide 242, and is configured to transmit the first guided light from the first aligned waveguide 240 to the first inverted waveguide 242. The curved path can have S shape, zigzag shape, L shape, C shape, half C shape, or a combination thereof. As illustrated in FIG. 2D, along the third direction (e.g., Z direction) the first conversion waveguide 244 can be arranged under the first aligned waveguide 240 and the first inverted waveguide 242 on a substrate 250 (e.g., silicon or quartz), and the electrodes 201, 202, 203 can be formed over the first aligned waveguide 240 and the first inverted waveguide 242. An isolating material 252 (e.g., SiO2) can be filled into the space between different components on the substrate 250.

The first conversion waveguide 244 and the first aligned waveguide 240 can be configured (e.g., having overlapped tapered ends) and positioned close enough such that the first guided light can be optically coupled from the first aligned waveguide 240 to the first conversion waveguide 244. The first conversion waveguide 244 and the first inverted waveguide 242 can be configured (e.g., having overlapped tapered ends) and positioned close enough such that the first guided light can be optically coupled from the first conversion waveguide 244 to the first inverted waveguide 242.

In some implementations, the first conversion waveguide 244 includes a first tapered end extending along the direction opposite to the first direction, and a second tapered end extending along the first direction. The first aligned waveguide 240 has a third tapered end extending along the first direction and is over the first tapered end of the first conversion waveguide 244 along the third direction (e.g., Z direction). The first inverted waveguide 242 has a fourth tapered end extending along the direction opposite to the first direction and is over the second tapered end of the first conversion waveguide 242 along the third direction.

In some implementations, e.g., as illustrated in FIGS. 2C and 2D, a cross sectional diagram at position 1 shows a cross section 240-1 of the first part of the booster 230 in the YZ plane before being tapered, which can be same as or similar to a cross section of the modulation section 200 in the YZ plane. Along the first direction, a cross section of the third tapered end of the first aligned waveguide 240 gradually decreases (e.g., in width along the Y direction), e.g., from 240-2 at position 2 to 240-3 at position 3 to zero at position 4. That is, there is no aligned waveguide at position 4. In contrast, a cross section of the first tapered end of the first conversion waveguide 244 gradually increases (e.g., in width along the Y direction), e.g., from 244-2 at position 2 to 244-3 at position 3 and to 244-4 at position 4. In some cases, the first tapered end can end at a position where the third tapered end starts. In some cases, the first tapered end and the third tapered end can be overlapped or separated along the first direction (e.g., X direction). Similarly, along the first direction, a cross section of the second tapered end of the first conversion waveguide 244 gradually decreases (e.g., in width along the Y direction), and a cross section of the fourth tapered end of the first inverted waveguide 242 gradually increases (e.g., in width along the Y direction). In some cases, the second tapered end can be ended at a position where the fourth taper end starts. In some cases, the second tapered end and the fourth tapered end can be overlapped or separated along the first direction (e.g., X direction).

In some implementations, e.g., as illustrated in FIG. 2C, a range of the first polarity converter 233a can be defined from an end of the first tapered end of the first conversion waveguide 244 to an end of the second tapered end of the first conversion waveguide 244. Within the range of the first polarity converter 233a, the first aligned waveguide 240 and the first inverted waveguide 242 can be electrically disconnected from the electrodes 201, 202, 203, e.g., as illustrated in the cross sectional diagrams at positions 2, 3, 4 of FIG. 2D.

The first conversion waveguide 244 can be configured by controlling the first and second tapered ends and/or the bending profile to actively tune an optical delay of the first guided light, which can ensure better velocity matching between the first guided light and the electrical wave. Additionally, as noted above, the electrodes 201, 202, 203 can be also configured to help achieve simultaneous impedance matching and velocity matching, e.g., by using multiple stacked layers and/or T-rail slow wave structures.

FIGS. 3A-3C illustrate another example differential EO MZM with ground-source-source-ground (GSSG) configuration. The MZM can include a modulation section 300 (as illustrated in FIG. 3A) and a booster 330 (as illustrated in FIGS. 3B-3C). The MZM can be implemented in the MZM 100 of FIG. 1. The modulation section 300 can be same as or similar to the modulation section 104 of FIG. 1. The booster 330 can be same as or similar to the booster 108 of FIG. 1. The MZM of FIGS. 3A-3C is similar to the MZM of FIGS. 2A-2D. Different from the MZM of FIGS. 2A-2D having the GSGSG configuration for electrodes, the MZM of FIGS. 3A-3C has the GSSG configuration for electrodes.

FIG. 3A illustrates a top view of the modulation section 300 in the MZM. As noted above, the modulation section 300 can include a first modulation waveguide 310 (in a first modulation arm) configured to modulate a first guided light (e.g., 101a of FIG. 1) by a first electrical field E1 and a second modulation waveguide 220 (in a second modulation arm) configured to modulate a second guided light (e.g., 101b of FIG. 1) by a second electrical field E2. The first guided light propagates along a first optical path (e.g., 103a of FIG. 1), and the second guided light propagates along a second optical path (e.g., 103b of FIG. 1).

As shown in FIG. 3A, the MZM can have a ground-source-source-ground (GSSG) configuration for electrodes, including a first ground electrode (G1) 301, a first source electrode (S+) 302, a second source electrode (S-) 304, and a second ground electrode (G2) 205. These electrodes 301, 302, 304, 305 extend along a first direction (e.g., X direction), and are sequentially arranged along a second direction (e.g., Y direction) intersecting with (e.g., perpendicular to) the first direction. The first ground electrode (G1) 301 and the first source electrode (S+) 302 are configured to be biased to generate the first electrical field E1, and are respectively coupled to opposite sides of the first modulation waveguide 310. The first source electrode electrode (S+) 302 and the second source electrode (S-) 304 are configured to be biased to generate the second electrical field E2, and are respectively coupled to opposite sides of the second modulation waveguide 320. The first ground electrode (G1) 301 and the second ground electrode (G2) 305 are commonly coupled to a ground. The first source electrode (S+) 302 is configured to be biased by a first bias voltage relative to the ground, and the second source electrode (S-) 304 is configured to be biased by a second bias voltage relative to the ground. The first bias voltage and the second bias voltage are equal in value but alternative in polarity. For example, the first bias voltage can be + 1 V, and the second bias voltage can be - 1 V. The first electrical field E1 and the second electrical field E2 can have different magnitudes and different polarities or directions, e.g., as shown in FIG. 3A.

FIG. 3B illustrates a schematic diagram of the booster 330 of the MZM. As noted above, the booster 330 can include a first part for a first modulation arm or along the first optical path and a second part for the second modulation arm or along the second optical path. The first part of the booster 330 includes: a first alignment segment 332a including a first aligned waveguide 340a configured to generate a first positive phase modulation (e.g., + *θ*a(x)) for the first guided light by the first electrical field E1, a first inverted segment 334a including a first inverted waveguide 342a configured to generate a first negative phase modulation (e.g., - *θ*a(x)) for the first guided light by a third electrical field E3, and a first polarity converter 333a includes a first conversion waveguide 344a optically coupled between the first aligned waveguide 340a and the first inverted waveguide 342a and configured to transmit the first light beam from the first aligned waveguide 340a to the first inverted waveguide 342a. The parameter x can represent a length of the first aligned waveguide 340a or a length of the first inverted waveguide 342a. Similarly, the second part of the booster 330 includes: a second alignment segment 332b including a second aligned waveguide 340b configured to generate a second positive phase modulation (e.g., + *θ*b(x)) for the second guided light by the second electrical field E2, a second inverted segment 334b including a second inverted waveguide 342b configured to generate a second negative phase modulation (e.g., - *θ*b(x)) for the second guided light by a fourth electrical field E4, and a second polarity converter 333b includes a second conversion waveguide 344b optically coupled between the second aligned waveguide 340b and the second inverted waveguide 342b and configured to transmit the second guided light from the second aligned waveguide 340b to the second inverted waveguide 342b. The parameter x can represent a length of the second aligned waveguide 340b or a length of the second inverted waveguide 342b. Along the first optical path of the first guided light, an effective length of the first aligned waveguide 340a is identical to an effective length of the first inverted waveguide 342a. Along the second optical path of the second guided light, an effective length of the second aligned waveguide 340b is identical to an effective length of the second inverted waveguide 342b. An effective length can be a physical length.

In some implementations, each of the waveguides in the modulation section 300, e.g., the first modulation waveguide 310 and the second modulation waveguide 320, and aligned/inverted waveguides in the booster 330 (or in the booster section like 106 of FIG. 1), e.g., the first aligned waveguide 340a, the first inverted waveguide 342a, the second aligned waveguide 340b, and the second inverted waveguide 342b, can includes include an EO material, e.g., thin-film lithium niobate (TFLN), barium titanate (BTO), or EO polymer. The waveguide can have a ridge structure formed in a Thin-Film Lithium Niobate (TFLN) layer. The first conversion waveguide 344a and/or the second conversion waveguide 344b can include a waveguide material different from the EO material. The waveguide material includes silicon (Si) or silicon nitride (SiN). In some examples, the first conversion waveguide 344a and/or the second conversion waveguide 344b can include a silicon-on-insulator (SOI) structure or a silicon nitride-on-insulator structure.

In some implementations, the modulation section 300 and the booster 330 can be directly connected together. At least part of the first modulation waveguide 310 and the first aligned waveguide 340a can be a single waveguide with the first aligned waveguide 340a as an end, and at least part of the second modulation waveguide 320 and the second aligned waveguide 340b can be a single waveguide with the second aligned waveguide 340b as an end. In some implementations, the modulation section 300 and the booster 330 are separated with a connector (e.g., a silicon waveguide) therebetween. The connector can optically couple the modulation section 300 to the booster 330.

As illustrated in FIG. 3B, as the third electrical field E3 is formed between the first source electrode (S+) 302 and the second source electrode (S-) 304, and the second electrical field E2 is also formed between the first source electrode (S+) 302 and the second source electrode (S-) 304, the third electrical field E3 can be same as the second electrical field E2, e.g., with a same magnitude. In contrast, as the fourth electrical field E4 is formed between the second source electrode (S-) 304 and the second ground electrode (G2) 305, and the first electrical field E1 is formed between the first ground electrode (G1) 301 and the first source electrode (S+) 302, the fourth electrical field E4 can be different from the first electrical field E1, e.g., with a different configuration of electrodes and/or a different magnitude.

A positive modulation effect (e.g., represented by positive phase modulation + *θ*(x)) in a aligned segment positively contributes to the overall modulation of the MZM, whereas a negative modulation effect (e.g., represented by negative phase modulation - *θ*(x)) in a corresponding inverted segment has a negative contribution. At low frequencies, the positive modulation effect and the negative modulation effect, e.g., *+θ*(*x*) and -(*x*), can fully cancel each other out, resulting in no gain. As the frequency increases, microwave loss (or RF loss) during propagation also increases. Consequently, the positive modulation effect, e.g., +*θ*(*x*), becomes stronger than the negative modulation effect, *-θ*(*x*), leading to positive gain at higher frequencies and enhancing the EO bandwidth. For example, a sum of the first positive phase modulation (e.g., + *θ*a(x)) and the first negative phase modulation (e.g., - *θ*a(x)) can be substantially identical to zero at a lower frequency and be greater than zero at a higher frequency, and a sum of the second positive phase modulation (e.g., + *θ*b(x)) and the second negative phase modulation (e.g., - *θ*b(x)) can be substantially identical to zero at the lower frequency and be greater than zero at the higher frequency. In such a way, the bandwidth of EO response of the MZM can be enhanced.

Further, the booster 330 (e.g., the first polarity converter 333a and/or the second polarity converter 333b) can be configured to tune an optical delay of a corresponding guided light for velocity matching between the corresponding guided light along a corresponding waveguide and an electrical signal traveling along one or more electrodes adjacent to the corresponding waveguide. The one or more electrodes can be structurally configured to simultaneously velocity-match the electrical signal to the corresponding guided light and provide a characteristic impedance matched to an external electrical source.

FIG. 3C is a schematic diagram illustrating an example of the booster 230. Each of the first aligned waveguide 340a and the first inverted waveguide 342a extends along the first direction (e.g., X direction) and has first and second opposite sides along the second direction (e.g., Y direction), e.g., as illustrated in FIG. 3C. The first aligned waveguide 340a and the first inverted waveguide 342a can be offset along the first direction and also along the second direction. Similarly, each of the second aligned waveguide 340b and the second inverted waveguide 342b extends along the first direction (e.g., X direction) and has first and second opposite sides along the second direction (e.g., Y direction), e.g., as illustrated in FIG. 3C. The second aligned waveguide 340b and the second inverted waveguide 342b can be offset along the first direction and also along the second direction. Each of the first aligned waveguide 340a, the first inverted waveguide 342a, the second aligned waveguide 340b, and the second inverted waveguide 342b can have a ridge structure formed in a Thin-Film Lithium Niobate (TFLN) layer.

As illustrated in FIGS. 3B-3C, a side of the first ground electrode (G1) 301 is coupled to a first side of the first aligned waveguide 340a, and a first side of the first source electrode (S+) 302 is coupled to a second side of the first aligned waveguide 340a. A second side of the first source electrode (S+) 302 is coupled to a first side of the first inverted waveguide 342a, and a first side of the second source electrode (S-) 304 is coupled to a second side of the first inverted waveguide 342a. Similarly, the second side of the first source electrode (S+) 302 is coupled to a first side of the second aligned waveguide 340b, and the first side of the second source electrode (S-) 304 is coupled to a second side of the second aligned waveguide 340b. A second side of the second source electrode (S-) 304 is coupled to a first side of the second inverted waveguide 342b, and a side of the second ground electrode (G2) 305 is coupled to a second side of the second inverted waveguide 342b.

Each of the electrodes 301, 302, 304, 305 can include a series of metal contacts along the first direction. Each of the source electrodes 302, 304 include metal contacts that are opposite on both sides along the second direction (e.g., Y direction) and metal contacts that are offset on one side along the first direction (e.g., X direction). For example, for metal contacts on the second side of the first source electrode (S+) 302, first metal contacts coupled to the first aligned waveguide 340a and second metal contacts coupled to the first inverted waveguide 342a are offset along the first direction; for metal contacts on the first side of the second source electrode (S-) 304, third metal contacts coupled to the second aligned waveguide 340b and fourth metal contacts coupled to the first inverted waveguide 342b are offset along the first direction. In some implementations, along the second direction, a first length of the first metal contacts of the first source electrode (S+) 302, a second length of the second metal contacts of the first source electrode (S+) 302, a third length of the third metal contacts of the second source electrode (S-) 304, and a fourth length of the fourth metal contacts of the second source electrode (S-) 304, can be configured to ensure at least one of: i) the first source electrode (S+) 302 and the second source electrode (S-) 304 being spaced along the second direction with a constant length along the first direction; ii) the first conversion waveguide 344a and the second conversion waveguide 344b being separated from one another along the second direction; or iii) lengths of the first conversion waveguide 344a along the second direction on opposite sides of the first source electrode (S+) 302 being identical and/or lengths of the second conversion waveguide 344b along the second direction on opposite sides of the second source electrode (S-) 304 being identical. In some examples, e.g., as illustrated in FIG. 3C, the first length is greater than the second length, and the fourth length is greater than the third length. The first length can be identical to the fourth length, and the second length can be identical to the third length. A sum of the first length and the second length is identical to a sum of the third length and the fourth length.

The metal contacts of the electrodes 301, 302, 304, 305 can be configured to provide more degrees of freedom to simultaneously achieve impedance and velocity matching. For example, the metal contacts can have a T-rail slow wave design, e.g., as illustrated in FIG. 3C, or a corrugated or periodically loaded structure. In some implementations, each of the electrodes 301, 302, 304, 305 can have a stacked structure including multiple layers of metal electrodes that are connected in series through vias along a third direction (e.g., Z direction) perpendicular to the first direction and the second direction, e.g., same as or similar to what is illustrated in FIG. 2D. The multiple layers of metal electrodes can be configured to form the transmission line to match impedance and velocity. Further, at least one of the multiple layers of metal electrodes can have a T-rail, corrugated, or periodically loaded structure.

The first conversion waveguide 344a can be same as or similar to the first conversion waveguide 244 of FIGS. 2A-2D. The second conversion waveguide 344b can be same as or similar to the second conversion waveguide 247 of FIGS. 2A-2D. The first conversion waveguide 344a and the second conversion waveguide 344b can be similar to each other. As illustrated in FIG. 3C, different from waveguide crossing, the first conversion waveguide 344a extends along a first curved path (e.g., a bended waveguide) between the first aligned waveguide 340a to the first inverted waveguide 342a, and is configured to transmit the first guided light from the first aligned waveguide 340a to the first inverted waveguide 342a. Similarly, the second conversion waveguide 344b extends along a second curved path (e.g., a bended waveguide) between the second aligned waveguide 340b to the second inverted waveguide 342b, and is configured to transmit the second guided light from the second aligned waveguide 340b to the second inverted waveguide 342b. The curved path can have S shape, zigzag shape, L shape, C shape, half C shape, or a combination thereof. Same as or similar to what is illustrated in FIG. 2D, along the third direction (e.g., Z direction), the first conversion waveguide 344a can be arranged under the first aligned waveguide 340a and the first inverted waveguide 342a on a substrate (e.g., silicon or quartz), and the second conversion waveguide 344b can be arranged under the second aligned waveguide 340b and the second inverted waveguide 342b on the substrate. The electrodes 301, 302, 304, 305 can be formed over the first aligned waveguide 340a, the first inverted waveguide 342a, the second aligned wavelength 340b, and the second inverted waveguide 342b. An isolating material (e.g., SiO2) can be filled into the space between different components on the substrate.

The first conversion waveguide 344a and the first aligned waveguide 340a can be configured (e.g., having overlapped tapered ends) and positioned close enough such that the first guided light can be optically coupled from the first aligned waveguide 340a to the first conversion waveguide 344a. The first conversion waveguide 344a and the first inverted waveguide 342a can be configured (e.g., having overlapped tapered ends) and positioned close enough such that the first guided light can be optically coupled from the first conversion waveguide 344a to the first inverted waveguide 342a. Similarly, the second conversion waveguide 344b and the second aligned waveguide 340b can be configured (e.g., having overlapped tapered ends) and positioned close enough such that the second guided light can be optically coupled from the second aligned waveguide 340b to the second conversion waveguide 344b. The second conversion waveguide 344b and the second inverted waveguide 342b can be configured (e.g., having overlapped tapered ends) and positioned close enough such that the second guided light can be optically coupled from the second conversion waveguide 344b to the second inverted waveguide 342b.

In some implementations, e.g., as illustrated in FIG. 3C, the first conversion waveguide 344a includes a first tapered end extending along the direction opposite to the first direction, and a second tapered end extending along the first direction. The first aligned waveguide 340a has a third tapered end extending along the first direction and is over the first tapered end of the first conversion waveguide 344a along the third direction (e.g., Z direction). The first inverted waveguide 342a has a fourth tapered end extending along the direction opposite to the first direction and is over the second tapered end of the first conversion waveguide 342a along the third direction. Similarly, the second conversion waveguide 344b includes a first tapered end extending along the direction opposite to the first direction, and a second tapered end extending along the first direction. The second aligned waveguide 340a has a third tapered end extending along the first direction and is over the first tapered end of the second conversion waveguide 344a along the third direction (e.g., Z direction). The second inverted waveguide 342b has a fourth tapered end extending along the direction opposite to the first direction and is over the second tapered end of the second conversion waveguide 342b along the third direction.

The first conversion waveguide 244a can be configured by controlling the first and second tapered ends and/or the bending profile to actively tune an optical delay of the first guided light, which can ensure better velocity matching between the first guided light and the electrical wave. Additionally, as noted above, the electrodes 301, 302, 304 can be also configured to help achieve simultaneous impedance matching and velocity matching, e.g., by using multiple stacked layers and/or T-rail slow wave structures. Similarly, the second conversion waveguide 344b can be configured by controlling the first and second tapered ends and/or the bending profile to actively tune an optical delay of the second guided light, which can ensure better velocity matching between the second guided light and the electrical wave. Additionally, as noted above, the electrodes 302, 304, 305 can be also configured to help achieve simultaneous impedance matching and velocity matching, e.g., by using multiple stacked layers and/or T-rail slow wave structures.

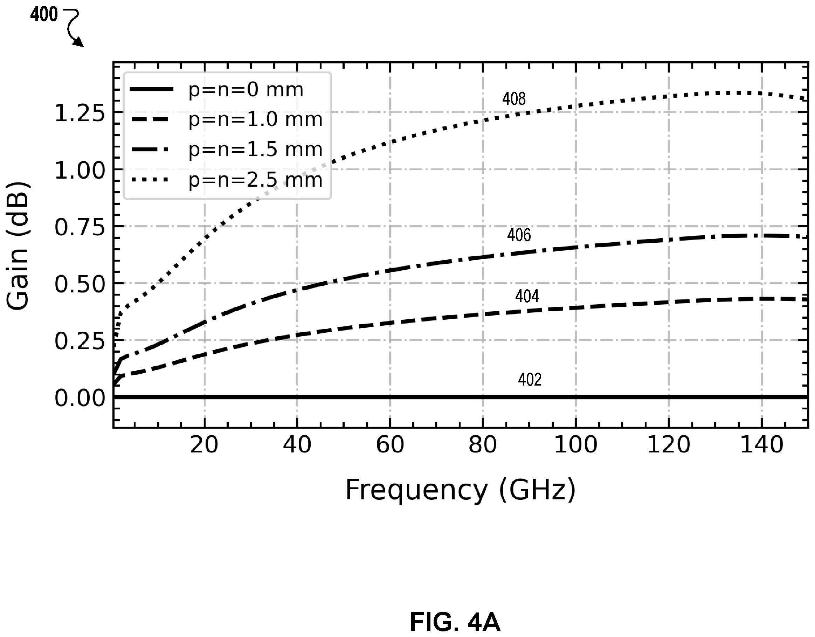

FIGS. 4A-4B illustrate performances of an example differential EO MZM with a booster, e.g., based on lengths of aligned segment and inverted segment in the booster. The MZM can be the MZM 100 of FIG. 1, the MZM of FIGS. 2A-2D, or the MZM of FIGS. 3A-3C. For example, the MZM can be a TFLN MZM. The booster can be the booster 108 of FIG. 1, the booster 230 of FIGS. 2B-2D, or the booster 330 of FIGS. 3B-3C. The MZM can further include a modulation section, e.g., the modulation section 104 of FIG. 1, the modulation section 200 of FIG. 2A, or the modulation section 300 of FIG. 3A.

The booster includes an aligned segment (e.g., the first aligned segment 232a or the second aligned segment 232b of FIGS. 2B-2D, or the first aligned segment 332a or the second aligned segment 332b of FIGS. 3B-3C) and an inverted segment (e.g., the first inverted segment 234a or the second inverted segment 234b of FIGS. 2B-2D, or the second inverted segment 334a or the second inverted segment 334b of FIGS. 3B-3C). A length p of the aligned segment is identical to a length n of the inverted segment, e.g., p = n.

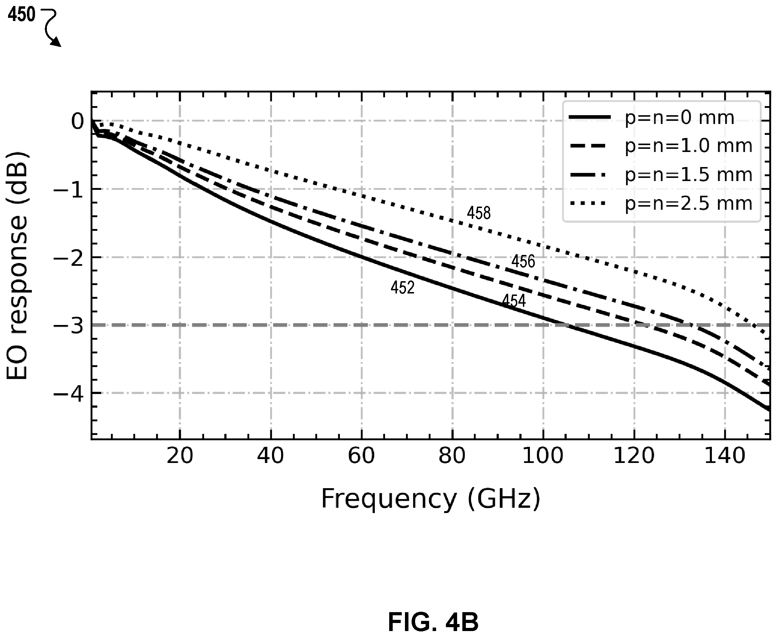

In the illustrated example, a length of the modulation section is 7 mm. The length p of the aligned segment and the length n of the aligned segment can be varied, e.g., with a range from 0 mm to 2.5 mm, which can affect the performance of the MZM. For example, FIG. 4A is a diagram 400 illustrating relationships between gain over frequency and the lengths p, n of the aligned segment and the inverted segment in the booster. Plots 402, 404, 406, 408 show the gain (dB) versus frequency in a range from 0 to 150 GHz, with respective lengths: p=n=0, 1.0 mm, 1.5 mm, and 2.5 mm. FIG. 4B is a diagram 450 illustrating relationships between EO response over frequency and the lengths p, n of the aligned segment and the inverted segment in the booster. Plots 452, 454, 456, 458 show a change of EO response versus frequency in the range from 0 to 150 GHz, with respective lengths: p=n=0, 1.0 mm, 1.5 mm, and 2.5 mm.

It is shown that the high frequency gain increases from 0 to 1.3 dB at a frequency of 140 GHz (as plots 402 and 408 show). The EO 3 dB bandwidth improves from 105 GHz to 145 GHz (as plots 452 and 458 show), while maintaining the same Vπ for the 7 mm long modulation section of the MZM.

Extra lengths of bandwidth boosters can increase a size of the differential EO MZM. In commercial foundries, die dimensions may have an upper limit, and accommodating the additional bandwidth boosters in the MZMs within a limited layout region may be a significant challenge. Implementation of the present disclosure provide folded layout designs for MZMs, which can address the above challenge. The folded layout designs can allow a total length of a modulator to be multiple times of a dimension of a limited chip region, making the MZM design compatible with full integration flow in a commercial foundry. For illustration, FIGS. 5A-5B show two example folded layouts for MZMs. Any other suitable folded design can be also implemented.

FIG. 5A illustrates an example folded layout for a differential EO MZM 500. The folded layout can be symmetrical. The MZM 500 can be same as or similar to the MZM 100 of FIG. 1, the MZM of FIGS. 2A-2D, or the MZM of FIGS. 3A-3C. For example, the MZM 500 can be a TFLN MZM. The MZM 500 can be formed on or in a substrate, e.g., the substrate 250 of FIG. 5D. The substrate can be a silicon substrate, or a quartz or glass substrate.

The MZM 500 can include an optical splitter 502 (e.g., the optical splitter 102 of FIG. 1), a modulation section (e.g., the modulation section 104 of FIG. 1, 200 of FIG. 2A, or 300 of FIG. 3A), a booster (e.g., the booster 108 of FIG. 1, the booster 230 of FIGS. 2B-2D, or the booster 330 of FIGS. 3B-3C), and an optical combiner 504 (e.g., the optical combiner 110 of FIG. 1).

The optical splitter 502 is configured to receive an input guided light (e.g., 101 of FIG. 1) from an input (e.g., from an optical fiber) and split the input guided light into first and second guided lights (e.g., 101a and 101b of FIG. 1) that are transmitted into a first modulation waveguide 512 (e.g., 210 of FIG. 2A or 310 of FIG. 3A) of the modulation section along a first optical path (e.g., 103a of FIG. 1) and a second modulation waveguide 522 (e.g., 220 of FIG. 2A or 320 of FIG. 3A) of the modulation section along a second optical path (e.g., 103b of FIG. 1). Each of the first modulation waveguide 512 and the second modulation waveguide 522 can be a single waveguide extending along a first direction (e.g., x direction) and can have a same length along the first direction. The first modulation waveguide 512 and the second modulation waveguide 522 can be spaced or separated from each other along a second direction (e.g., y direction) perpendicular to the first direction.

The booster includes a first part along the first optical path and a second part along the second optical path. The first part can include a first aligned waveguide 514 (e.g., 240 of FIGS. 2B-2D or 340a of FIGS. 3B-3C) and a first inverted waveguide 516 (e.g., 242 of FIGS. 2B-2D or 342a of FIGS. 3B-3C). The second part can include a second aligned waveguide 524 (e.g., 246 of FIGS. 2B-2D or 340b of FIGS. 3B-3C) and a second inverted waveguide 526 (e.g., 248 of FIGS. 2B-2D or 342b of FIGS. 3B-3C. At least part of the first aligned waveguide 514 and the first modulation waveguide 512 can be integrated as a single waveguide, or two waveguides that are connected together. At least part of the second aligned waveguide 524 and the second modulation waveguide 522 can be integrated as a single waveguide, or two waveguides that are connected together.

The first aligned waveguide 514 can include two portions 514a, 514b that are parallel to each other along the first direction and optically coupled together by a first connector 513. Similarly, the second aligned waveguide 524 can include two portions 524a, 524b that are parallel to each other along the first direction and optically coupled together by a second connector 523. In some examples, a total length of the two portions 514a, 514b of the first aligned waveguide 514 can be identical to a total length of the two portions 524a, 524b of the second aligned waveguide 524. The corresponding portions 514a and 524a can have a same length, and the corresponding portions 514b and 524b can have a same length.

The first inverted waveguide 516 can include two portions 516a, 516b that are parallel to each other along the first direction and optically coupled together by a third connector 517. Similarly, the second inverted waveguide 526 can include two portions 526a, 526b that are parallel to each other along the first direction and optically coupled together by a fourth connector 527. In some examples, a total length of the two portions 516a, 516b of the first inverted waveguide 516 can be identical to a total length of the two portions 526a, 526b of the second inverted waveguide 526. The corresponding portions 516a and 526a can have a same length, and the corresponding portions 516b and 526b can have a same length.

The booster further includes: a first conversion waveguide 515 (e.g., 244 of FIGS. 2B-2D or 344a of FIGS. 3B-3C) in a first optical path and a second conversion waveguide 525 (e.g., 247 of FIG. 2B or 344b of FIGS. 3B-3C) in a second optical path. The first conversion waveguide 515 is coupled between the first aligned waveguide 514 and the first inverted waveguide 516 and configured to couple the first guided light from the first aligned waveguide 514 to the first inverted waveguide 516. The second conversion waveguide 525 is coupled between the second aligned waveguide 524 and the second inverted waveguide 526 and configured to couple the first guided light from the second aligned waveguide 524 to the second inverted waveguide 526.

In some examples, the first modulation waveguide 512, the first aligned waveguide 514 (514a, 514b), the first inverted waveguide 516 (516a, 516b), the second modulation waveguide 522, the second aligned waveguide 524, and the second inverted waveguide 526 can include a same EO material, e.g., thin-film lithium niobate (TFLN), barium titanate (BTO), or EO polymer. In some examples, each of the waveguides 512, 514, 516, 522, 524, 526 includes a ridge structure formed in a Thin-Film Lithium Niobate (TFLN) layer, e.g., as illustrated with further details in FIG. 2D. The first conversion waveguide 515 and the second conversion waveguide 525 can have a curved or bended profile and can include a waveguide material such as silicon or silicon nitride. In some examples, the first conversion waveguide 515 and/or the second conversion waveguide 525 can include a silicon-on-insulator (SOI) structure or a silicon nitride-on-insulator structure. The connectors 513, 517, 523, 527 can have a C shape and can include a waveguide material such as silicon or silicon nitride, or the EO material same as the waveguides 512, 514, 516, 522, 524, 526.

FIG. 5B illustrates an example folded layout for a differential EO MZM 550. The MZM 550 can be same as or similar to the MZM 100 of FIG. 1, the MZM of FIGS. 2A-2D, or the MZM of FIGS. 3A-3C. For example, the MZM 550 can be a TFLN MZM. The MZM 550 can be formed on or in a substrate, e.g., the substrate 250 of FIG. 5D. The substrate can be a silicon substrate, or a quartz or glass substrate.

Different from the MZM 500 that has a symmetrical folded layout, the MZM 550 has an asymmetrical folded layout. The corresponding waveguides in the MZM 550 along different optical paths can be separated into different number of portions.

As illustrated in FIG. 5B, the MZM 550 can include an optical splitter 552 (e.g., the optical splitter 102 of FIG. 1 or 502 of FIG. 5A), a modulation section (e.g., the modulation section 104 of FIG. 1, 200 of FIG. 2A, or 300 of FIG. 3A), a booster (e.g., the booster 108 of FIG. 1, the booster 230 of FIGS. 2B-2D, or the booster 330 of FIGS. 3B-3C), and an optical combiner 554 (e.g., the optical combiner 110 of FIG. 1 or 504 of FIG. 5A).

The optical splitter 504 is configured to receive an input guided light (e.g., 101 of FIG. 1) from an input (e.g., from an optical fiber) and split the input guided light into first and second guided lights (e.g., 101a and 101b of FIG. 1) that are transmitted into a first modulation waveguide 562 (e.g., 210 of FIG. 2A or 310 of FIG. 3A) of the modulation section along a first optical path (e.g., 103a of FIG. 1) and a second modulation waveguide 572 (e.g., 220 of FIG. 2A or 320 of FIG. 3A) of the modulation section along a second optical path (e.g., 103b of FIG. 1). The first modulation waveguide 562 is a single waveguide extending along a first direction (e.g., x direction), while the second modulation waveguide 572 includes multiple portions 572a, 572b, 572c that are parallel to one another along the first direction. The first modulation waveguide 562 and the second modulation waveguide 572 (e.g., 572a, 572b, 572c) can be spaced or separated from each other along a second direction (e.g., y direction) perpendicular to the first direction. Adjacent portions 572a, 572b of the second modulation waveguide 572 are coupled together by a first connector 573a, and adjacent portions 572b, 572c of the second modulation waveguide 572 are coupled together by a second connector 573b. A total length of the multiple portions 572a, 572b, 572c of the second modulation waveguide 572 can be identical to a length of the first modulation waveguide 562.

The booster includes a first part along the first optical path and a second part along the second optical path. The first part can include a first aligned waveguide 564 (e.g., 240 of FIGS. 2B-2D or 340a of FIGS. 3B-3C) and a first inverted waveguide 566 (e.g., 242 of FIGS. 2B-2D or 342a of FIGS. 3B-3C). The second part can include a second aligned waveguide 574 (e.g., 246 of FIGS. 2B-2D or 340b of FIGS. 3B-3C) and a second inverted waveguide 576 (e.g., 248 of FIGS. 2B-2D or 342b of FIGS. 3B-3C. At least part of the first aligned waveguide 564 and the first modulation waveguide 562 can be integrated as a single waveguide, or two waveguides that are connected together. The second aligned waveguide 574 and at least part of the second modulation waveguide 572 can be integrated as a single waveguide, or two waveguides that are connected together.

The first aligned waveguide 564 can include two portions 564a, 564b that are parallel to each other along the first direction and optically coupled together by a first connector 563. The second aligned waveguide 524 can be a single waveguide along the first direction. In some examples, a total length of the two portions 564a, 564b of the first aligned waveguide 564 can be identical to a length of the second aligned waveguide 574.

The first inverted waveguide 566 can be a single waveguide extending along the first direction. The second inverted waveguide 576 can be also a single waveguide. In some examples, a length of the first inverted waveguide 566 can be identical to a length of the second inverted waveguide 576.

The booster further includes: a first conversion waveguide 565 (e.g., 244 of FIGS. 2B-2D or 344a of FIGS. 3B-3C) in a first optical path and a second conversion waveguide 575 (e.g., 247 of FIG. 2B or 344b of FIGS. 3B-3C) in a second optical path. The first conversion waveguide 565 is coupled between the first aligned waveguide 564 and the first inverted waveguide 566 and configured to couple the first guided light from the first aligned waveguide 564 to the first inverted waveguide 566. In some examples, an additional connector 567 can be coupled between the first aligned waveguide 564 and the first inverted waveguide 566 and be configured to transmit the first guided light, together with the first conversion waveguide 565. The order of the first conversion waveguide 565 and the additional connector 567 can be changed based on the layout of the MZM 550. The second conversion waveguide 575 is coupled between the second aligned waveguide 574 and the second inverted waveguide 576 and configured to couple the second guided light from the second aligned waveguide 574 to the second inverted waveguide 576.

In some examples, the first modulation waveguide 562, the first aligned waveguide 564 (564a, 564b), the first inverted waveguide 566, the second modulation waveguide 572 (572a, 572b, 572c), the second aligned waveguide 574, and the second inverted waveguide 576 can include a same EO material, e.g., thin-film lithium niobate (TFLN), barium titanate (BTO), or EO polymer. In some examples, each of the waveguides 562, 564, 566, 572, 574, 576 includes a ridge structure formed in a Thin-Film Lithium Niobate (TFLN) layer, e.g., as illustrated with further details in FIG. 2D. The first conversion waveguide 565 and the second conversion waveguide 575 can have a curved or bended profile and can include a waveguide material such as silicon or silicon nitride. In some examples, the first conversion waveguide 565 and/or the second conversion waveguide 575 can include a silicon-on-insulator (SOI) structure or a silicon nitride-on-insulator structure. The connectors 563, 567, 573a, 573b can have a C shape and can include a waveguide material such as silicon or silicon nitride, or the EO material same as the waveguides 562, 564, 566, 572, 574, 576.

As described herein in detail, the present disclosure includes a number of practical applications having features described herein that provide benefits and/or solve problems associated with providing a multi-node computing system with sufficient memory, processing, bandwidth, and energy efficiency constraints for effective operation of AI and/or ML models. Some example benefits are described herein with reference to various features and functionalities provided by the computing system as described. It will be appreciated that benefits explicitly described with reference to one or more examples described herein are provided by way of example and are not intended to be an exhaustive list of all possible benefits of the computing system.

For example, the various circuit packages described herein, and connections thereof may enable the construction of complex topologies of compute and memory nodes that can best serve a specific application. In a simple example, a set of photonic channels connect memory circuit packages with memory nodes (e.g., memory resources) to one or more compute circuit packages with compute nodes. The compute circuit packages, and memory circuit packages can be connected and configured in any number of network topologies which may be facilitated through the use of one or more photonic channels include optical fibers. This may provide the benefit of relieving distance constraints between nodes (compute and/or memory) and, for example, the memory circuit packages can physically be placed arbitrarily far from the compute circuit packages (within the optical budget of the photonic channels).

The various network topologies may provide significant speed and energy savings. For example, photonic transport of data is typically more efficient than an equivalent high-bandwidth electrical interconnect in an EIC of the circuit package itself. By implementing one or more photonic channels, the electrical cost of transmitting data may be significantly reduced. Additionally, photonic channels are typically much faster than electrical interconnects, and thus the use of photonic channels permits the grouping and topology configurations of memory and compute circuit packages that best serve the bandwidth and connectivity needs of a given application. Indeed, the architectural split of memory and compute networks allows each to be optimized for the magnitude of data, traffic patterns, and bandwidth of each network applications. A further added benefit is that of being able to control the power density of the system by spacing memory and compute circuit packages to optimize cooling efficiency, as the distances and arrangements are not dictated by electrical interfaces.

The described compute and memory nodes and fabric of communication links including the modulators and electrical interconnects described above provide a distributed data processing environment, which may be referred to as a fabric-based environment, on which programs can be run. A compute node or memory node in such an environment will generally have installed on it a software stack that runs on one or more processors of the node to provide an operating environment, which may be referred to as a layer, on which program software deployed to the node can run.

The compute and memory nodes of a particular environment can be homogeneous, i.e., all the compute nodes are basically the same and all the memory nodes are basically the same, or they can be heterogeneous.

A compute node has one or more processors that can perform data processing operations, e.g., by executing program instructions, by performing operations implemented in hardware or firmware, by routing a data packet through the electrical interface, or otherwise. The processors can include, for example, CPUs, accelerators of various kinds, e.g., GPUs (graphics processing units), TPUs (tensor processing units), DPUs (data processing units), or programmed FPGAs (field-programmable gate arrays) or other special purpose ASICs (application specific integrated circuits), or by a combination of two or more of them.

A compute node generally has or is directly connected electrically to local memory, e.g., HBM, DDR, L1 and L2 caches, registers and the like.

A memory node, while it may have processors to run software and may have other characteristics of a compute node, has as its primary purpose in a fabric-based environment the purpose of providing access to data, specifically, for example, for use by compute processes running on compute nodes, and to enable other nodes to read and write data over photonic channels connecting the memory node to the other nodes. The memory devices a memory node has for storing data can be of one or more types. They are connected through respective memory controllers, message routers, and photonic interfaces through which other nodes read and write data by sending messages to ports implemented on the memory node.

Compute and memory nodes can have memory devices of one or more kinds, including, for example, flash memory, read-only memory, random-access memory (RAM), static RAM, dynamic RAM (DRAM), synchronous DRAM (SDRAM), double data rate (DDR) based DRAM, or high bandwidth memory (HBM) memory, or a combination of two or more of them.

Unidirectional photonic links have a photonic transmitter at one end and a photonic receiver at the other end linked by an optical waveguide, e.g., a semiconductor waveguide or an optical fiber.

Generally, a photonic channel used in a fabric-based environment is a bidirectional photonic channel, which has at least two unidirectional photonic links that transmit in opposite directions, providing, for example, for the transmission of messages in one direction and acknowledgements in the other.

In some implementations, the nodes of a fabric-based environment include routers to route data from one node, directly or through intermediary nodes, to another. Generally, data is transferred in messages over photonic or electrical channels in response to programs executing on the nodes or to operations of memory controllers or similar devices, for example. Such messages can be sent point-to-point, when the two nodes have links directly connect them, or through routers on one or more intermediary nodes that route messages according to addressing data that is part of the messages.

In some implementations, a compute node will have multiple ports, electrical or photonic or both, each directly connected by a link or channel, e.g., bidirectional channel, to a respective other node; and the messages sent by the compute node will be routed to the messages' target nodes by a router on the compute node that directs the messages to the appropriate port on the compute node. When a data message is received over a port, the router on the receiving node will examine the message header to determine the destination node in the fabric, either the node itself or another node, and process the message accordingly.

The addressing of messages through the fabric-based environment can be implemented in a variety of ways. In some implementations, multiple methods are implemented in the same fabric-based environment. In some addressing methods, messages carry the actual address of the message destination, and routers in the fabric implement what in effect are routing tables to transmit messages toward their destination addresses. In some implementations, the routing tables are updated dynamically in response to information about device failures or losses of connections, for example. In other addressing methods, messages are routed by relative addresses, i.e., addresses expressed as directional steps from the current node. Modeling nodes as points on a 2D, 3D, or higher dimensional grid, a target destination can be represented in a message header as a number of steps, which may be positive, negative, or zero, in each of the dimensions. When a message has been transmitted, the receiving node can update the message header of the message to account for the steps taken by the message from the sender in each dimension, with the result that the message header now contains a relative address relative to the receiving node. In other addressing methods, a combination of direct and relative addresses is used.

Memory nodes can be interconnected by photonic links, e.g., in the form of bidirectional photonic channels, to form a memory fabric. The memory fabric can be part of a server and generally includes multiple nodes in one or more packages. A package can include hundreds of nodes extending in multiple dimensions. A fabric made up of multiple packages can have hundreds of thousands of nodes or more, connected by photonic channels in a 2D, 3D, or higher dimensional memory fabric when the nodes have a sufficient number of photonic ports.

Generally, a fabric-based environment is implemented using packages of nodes. A package, sometimes called a System in Package (SiP), includes multiple nodes that are interconnected potentially both at an electrical layer of the package and on an interconnection substrate, e.g., a PIC, and which can be enclosed in a single casing. Each of the nodes in a package can have electrical connections, photonic connections, or both to other nodes within the package. Connections within a package are referred to as intra-chip connections, with the substrate being considered a chip. Connections between nodes in different packages are referred to as inter-chip connections.

In an environment with multiple packages, some, or all of the nodes in one package have inter-chip photonic connections to nodes in one or more other packages. Generally, these inter-chip photonic connections are made by bidirectional photonic channels.

Generally, a program that runs on a fabric-based environment will be made up of program modules, each constructed to run on one of the nodes of the environment. Generally, each module includes instructions to invoke the services of the software stack on which it is running or of the underlying physical devices of the node, to load and store data, locally or remotely, to perform computing and control operations, and to communicate and coordinate with other modules of the program running on the same node or on other nodes on which the program has also been deployed.

Each of the one or more modules that make up a program can be coded separately for a respective particular kind of node. Or a large program can be broken up automatically, e.g., by a compiler, into separately deployable components to run on the nodes of a fabric-based environment. The environment and the resources available in its nodes and the characteristics of its connections, are described by a physical topology, to define, for example, the target for which the compiler is generating executable code.

A program or the modules of a program can generally be programmed using any suitable procedural, interpreted, or declarative language, or combinations of them, from which executable or interpretable code is automatically generated, e.g., by a compiler, to run on some run-time environment, for example, on some node hardware or some software layer or layers installed on the hardware.

A physical topology generally describes the locations of the nodes, any intra-chip connections, and inter-chip connections each node has to other nodes. In some fabric-based environments, nodes are implemented in packages, and the location of a node may also include the package in which it is found. A physical topology may be stored in a topology file that defines an environment for a compiler or for deployment management software.

Program modules and components of the software stack will generally be deployed to nodes through electrical links from a control computer, which may be one of the nodes of the fabric-based environment programmed to perform this function, or which may be a separate control computer. These links can be direct or indirect, and may be provided by an electrical bus, e.g., a PCIe (Peripheral Component Interconnect Express) bus. In some implementations, the photonic links of the fabric-based environment may also be used to deploy modules and components to nodes.

Executable code can be deployed to nodes directly, or, for example, in containers which can be managed by a container management or orchestration system.

A fabric-based environment will generally include one or more nodes that are connected, or can be connected dynamically, to devices external to the fabric. External devices can include devices, for example, to provide human interaction for programs running on the fabric, or to provide data to, or to receive results from, such programs.

The fabric-based environment can be or be part of a general computing environment for executing programs. The computing environment can include or be associated with a compilation environment. The compilation environment takes a program input, e.g., an input machine learning model, and transforms it into machine-readable form by executing a compiler and a code generator. An input machine learning model can be provided in the form of a TensorFlow model, for example.

The application code generated by the compiler and code generator is, in some implementations, provided to a runtime environment running on the nodes of the computing environment. The runtime environment provides services to the running application code on the computing environment. In some implementations, the nodes of the computing environment include firmware that performs hardware-related operations, e.g., monitoring and driving hardware components of the computing environment, used by the runtime environment and the application code.

The application and runtime environment run on the compute nodes and use, if and as requested by the application, the resources of the fabric-based environment, including, for example, the compute nodes, memory nodes, memory devices, links and channels, routers, and ports.

As discussed herein in detail, the present disclosure includes a number of practical applications having features described herein that provide benefits and/or solve problems associated with providing a multi-node computing system with sufficient memory, processing, bandwidth, and energy efficiency constraints for effective operation of AI and/or ML models. Some example benefits are discussed herein in connection with various features and functionalities provided by the computing system as described.

For example, the various circuit packages described herein, and connections thereof may enable the construction of complex topologies of compute and memory nodes that can best serve a specific application. In a simple example, a set of photonic channels connect memory circuit packages with memory nodes (e.g., memory resources) to one or more compute circuit packages with compute nodes. The compute circuit packages, and memory circuit packages can be connected and configured in any number of network topologies which may be facilitated through the use of one or more photonic channels include optical fibers. This may provide the benefit of relieving distance constraints between nodes (compute and/or memory) and, for example, the memory circuit packages can physically be placed arbitrarily far from the compute circuit packages (within the optical budget of the photonic channels).

The various network topologies may provide significant speed and energy savings. For example, photonic transport of data is typically more efficient than an equivalent high-bandwidth electrical interconnect in an EIC of the circuit package itself. By implementing one or more photonic channels, the electrical cost of transmitting data may be significantly reduced. Additionally, photonic channels are typically much faster than electrical interconnects, and thus the use of photonic channels permits the grouping and topology configurations of memory and compute circuit packages that best serve the bandwidth and connectivity needs of a given application. Indeed, the architectural split of memory and compute networks allows each to be optimized for the magnitude of data, traffic patterns, and bandwidth of each network applications. A further added benefit is that of being able to control the power density of the system by spacing memory and compute circuit packages to optimize cooling efficiency, as the distances and arrangements are not dictated by electrical interfaces.

This specification uses the term "configured to" in connection with systems, apparatus, and computer program components. That a system is configured to perform particular operations or actions means that the system has installed on it software, firmware, hardware, or a combination of them that in operation cause the system to perform the operations or actions. That one or more computer programs is configured to perform particular operations or actions means that the one or more programs include instructions that, when executed, perform the operations or actions. That special-purpose circuitry is configured to perform particular operations or actions means that the circuitry circuit elements that, when put into operation, perform the operations or actions.

The articles "a," "an," and "the" are intended to mean that there are one or more of the elements in the preceding descriptions. The terms "comprising," "including," and "having" are intended to be inclusive and mean that there may be additional elements other than the listed elements. Additionally, it should be understood that references to "one example" or "an example" of the present disclosure are not intended to be interpreted as excluding the existence of additional examples that also incorporate the recited features. For example, any element described in relation to an example herein may be combinable with any element of any other example described herein. Numbers, percentages, ratios, or other values stated herein are intended to include that value, and also other values that are "about" or "approximately" the stated value, as would be appreciated by one of ordinary skill in the art encompassed by examples of the present disclosure. A stated value should therefore be interpreted broadly enough to encompass values that are at least close enough to the stated value to perform a desired function or achieve a desired result. The stated values include at least the variation to be expected in a suitable manufacturing or production process, and may include values that are within 10%, within 5%, within 1%, within 0.1%, or within 0.01% of a stated value.

As used herein, the term "substantially" refers to a majority of, or mostly, as in at least about 50%, 60%, 70%, 80%, 90%, 95%, 96%, 97%, 98%, 99%, 99.5%, 99.9%, 99.99%, or at least about 99.999% or more. Values expressed in a range format should be interpreted in a flexible manner to include not only the numerical values explicitly recited as the limits of the range, but also to include all the individual numerical values or sub-ranges encompassed within that range as if each numerical value and sub-range is explicitly recited. For example, a range of "0. 1% to about 5%" or "0.1% to 5%" should be interpreted to include about 0.1% to about 5%, as well as the individual values (for example, 1%, 2%, 3%, and 4%) and the sub-ranges (for example, 0.1% to 0.5%, 1.1% to 2.2%, 3.3% to 4.4%) within the indicated range. The statement "X to Y" has the same meaning as "about X to about Y," unless indicated otherwise. Likewise, the statement "X, Y, or Z" has the same meaning as "about X, about Y, or about Z," unless indicated otherwise.

Further, it should be understood that any directions or reference frames in the preceding description are merely relative directions or movements. For example, any references to "up" and "down" or "above" or "below" are merely descriptive of the relative position or movement of the related elements.

In addition, the phraseology or terminology employed in the present disclosure, and not otherwise defined, is for the purpose of description only and not of limitation. Any use of section headings is intended to aid reading of the document and is not to be interpreted as limiting; information that is relevant to a section heading may occur within or outside of that particular section.

The following numbered paragraphs are non-limiting examples of various embodiments of the present disclosure.
1. An electro-optic modulator, comprising: a modulation section comprising a first modulation waveguide and a second modulation waveguide, the first modulation waveguide being configured to modulate first guided light by a first electrical field during operation of the electro-optic modulator and the second modulation waveguide being configured to modulate second guided light by a second electrical field during operation of the electro-optic modulator; and a booster section coupled to the modulation section, wherein a booster of the booster section comprises: a first aligned waveguide configured to generate a first positive phase modulation for the first guided light by the first electrical field, a first inverted waveguide configured to generate a first negative phase modulation for the first guided light by a third electrical field, a second aligned waveguide configured to generate a second positive phase modulation for the second guided light by the second electrical field, and a second inverted waveguide configured to generate a second negative phase modulation for the second guided light by a fourth electrical field, wherein the booster is configured to cause, during operation of the electro-optic modulator, at least one of the third electrical field to be different from the second electrical field or the fourth electrical field to be different from the first electrical field, and wherein the first modulation waveguide, the second modulation waveguide, the first aligned waveguide and the first inverted waveguide, and the second aligned waveguide and the second inverted waveguide, comprise an electro-optic (EO) material.
2. The electro-optic modulator of embodiment 1, wherein the EO material comprises thin-film lithium niobate (TFLN), barium titanate (BTO), or EO polymer.
3. The electro-optic modulator of embodiment 1 or 2, configured to be a Thin-Film Lithium Niobate (TFLN) Mach-Zehnder (MZ) modulator.
4. The electro-optic modulator of any one of embodiments 1 to 3, wherein the modulation section is configured to provide a modulation strength with a switching voltage Vπ, and wherein the booster section is configured to provide substantially no gain at lower frequencies and positive gains at higher frequencies to enhance an overall EO bandwidth of the electro-optic modulator, without sacrificing the switching voltage Vπ.
5. The electro-optic modulator of any one of embodiments 1 to 4, wherein the booster further comprises: a first conversion waveguide optically coupled between the first aligned waveguide and the first inverted waveguide and configured to transmit the first light beam from the first aligned waveguide to the first inverted waveguide, and a second conversion waveguide optically coupled between the second aligned waveguide and the second inverted waveguide and configured to transmit the second guided light from the second aligned waveguide to the second inverted waveguide.
6. The electro-optic modulator of embodiment 5, wherein at least one of the first conversion waveguide or the second conversion waveguide is configured to tune an optical delay of a corresponding guided light for velocity matching between the corresponding guided light along a corresponding waveguide and an electrical signal traveling along one or more electrodes adjacent to the corresponding waveguide.
7. The electro-optic modulator of embodiment 6, wherein the one or more electrodes are configured to simultaneously velocity-match the electrical signal to the corresponding guided light and provide a characteristic impedance matched to an external electrical source.
8. The electro-optic modulator of embodiment 7, wherein at least one of the one or more electrodes comprises a T-rail structure, or a corrugated or periodically loaded structure with micro capacitors or micro inductors.
9. The electro-optic modulator of any one of embodiments 5 to 8, wherein a sum of the first positive phase modulation and the first negative phase modulation is substantially identical to zero at a lower frequency and is greater than zero at a higher frequency, and wherein a sum of the second positive phase modulation and the second negative phase modulation is substantially identical to zero at the lower frequency and is greater than zero at the higher frequency.
10. The electro-optic modulator of any one of embodiments 5 to 9, wherein at least one of the first conversion waveguide or the second conversion waveguide comprises a waveguide material different from the electro-optic material.
11. The electro-optic modulator of embodiment 10, wherein the electro-optic material comprises thin film lithium niobate (TFLN), and the waveguide material comprises silicon or silicon nitride.
12. The electro-optic modulator of any one of embodiments 5 to 11, wherein the first aligned waveguide and the first inverted waveguide extend along a first direction, and are offset along a second direction intersecting with the first direction, and wherein the first conversion waveguide extends along a curved path from the first aligned waveguide to the first inverted waveguide, and wherein the first conversion waveguide comprises: a first tapered end extending along the direction opposite to the first direction, and a second tapered end extending along the first direction, and wherein the first aligned waveguide has a third tapered end extending along the first direction and being over the first tapered end of the first conversion waveguide along a third direction perpendicular to the first direction and the second direction, and the first inverted waveguide has a fourth tapered end extending along the direction opposite to the first direction and being over the second tapered end of the first conversion waveguide along the third direction.
13. The electro-optic modulator of embodiment 12, wherein, along the first direction, a cross section of the third tapered end gradually decreases, while a cross section of the first tapered end gradually increases, and wherein, along the first direction, a cross section of the second tapered end gradually decreases, and a cross section of the fourth tapered end gradually increases.
14. The electro-optic modulator of embodiment 12 or 13, wherein the first tapered end is ended at a first position where the third tapered end starts, and the second tapered end is ended at a second position where the fourth taper end starts.
15. The electro-optic modulator of any one of embodiments 5 to 14, wherein at least one of the first conversion waveguide or the second conversion waveguide comprises a silicon-on-insulator (SOI) structure or a silicon nitride-on-insulator structure.
16. The electro-optic modulator of any one of embodiments 1 to 15, comprising: a first ground electrode; a first source electrode; a second ground electrode; a second source electrode; and a third ground electrode, wherein the first ground electrode and the first source electrode are configured to be biased to generate the first electrical field, and are respectively coupled to opposite sides of the first modulation waveguide and respectively coupled to opposite sides of the first aligned waveguide, wherein the first source electrode and the third ground electrode are configured to be biased to generate the third electrical field, and are respectively coupled to opposite sides of the first inverted waveguide, wherein the second ground electrode and the second source electrode are configured to be biased to generate the second electrical field, and are respectively coupled to opposite sides of the second modulation waveguide and respectively coupled to opposite sides of the second aligned waveguide, and wherein the second source electrode and the third ground electrode are configured to be biased to generate the fourth electrical field, and are respectively coupled to opposite sides of the second inverted waveguide.
17. The electro-optic modulator of embodiment 16, wherein the first ground electrode, the second ground electrode, and the third ground electrode are commonly coupled to a ground, and wherein the first source electrode is configured to be biased by a first bias voltage relative to the ground, and the second source electrode is configured to be biased by a second bias voltage relative to the ground, and wherein the first bias voltage and the second bias voltage are equal in value but alternative in polarity.
18. The electro-optic modulator of embodiment 16 or 17, wherein the first source electrode comprises: a first side coupled to the first modulation waveguide and the first aligned waveguide, and a second side coupled to the first inverted waveguide, and wherein the second source electrode comprises: a third side coupled to the second modulation waveguide and the second aligned waveguide, and a fourth side coupled to the second inverted waveguide.
19. The electro-optic modulator of any one of embodiments 16 to 18, wherein the first modulation waveguide extends along a first direction, wherein the first ground electrode, the first source electrode, the second ground electrode, the second source electrode, and the third ground electrode are sequentially arranged along a second direction intersecting along the first direction, and wherein at least one of the first ground electrode, the first source electrode, the second ground electrode, the second source electrode, or the third ground electrode has an electrode structure formed over a corresponding waveguide along a third direction perpendicular to the first direction and the second direction.
20. The electro-optic modulator of embodiment 19, wherein the electrode structure comprises multiple layers of metal electrodes coupled together through conductive vias along the third direction, and wherein at least one of the multiple layers of metal electrodes comprises: a T-rail structure, or a corrugated or periodically loaded structure.
21. The electro-optic modulator of embodiment 20, wherein a first layer of metal electrode closer to the corresponding waveguide than a second layer of metal electrode along the third direction is closer to the corresponding waveguide than the second layer of metal electrode along the second direction.
22. The electro-optic modulator of any one of embodiments 1 to 15, comprising: a first ground electrode; a first source electrode; a second source electrode; and a second ground electrode, wherein the first ground electrode and the first source electrode are configured to be biased to generate the first electrical field, and are respectively coupled to opposite sides of the first modulation waveguide and respectively coupled to opposite sides of the first aligned waveguide, wherein the first source electrode and the second source electrode are configured to be biased to generate the third electrical field, and are respectively coupled to opposite sides of the first inverted waveguide, wherein the first source electrode and the second source electrode are configured to be biased to generate the second electrical field, and are respectively coupled to opposite sides of the second modulation waveguide and respectively coupled to opposite sides of the second aligned waveguide, and wherein the second source electrode and the third ground electrode are configured to be biased to generate the fourth electrical field, and are respectively coupled to opposite sides of the second inverted waveguide.
23. The electro-optic modulator of embodiment 22, wherein the first source electrode extends along a first direction, and has a first side and a second side that are opposite to each other along a second direction perpendicular to the first direction, and wherein the first source electrode comprises: a first part on the first side that is coupled to the first modulation waveguide and the first aligned waveguide, a second part on the second side that is coupled to the second modulation waveguide and the second aligned waveguide, and a third part on the second side that is coupled to the first inverted waveguide, wherein the first part and the second part are opposite to each other along the second direction, and the second part and the third part are spaced from each other along the first direction.
24. The electro-optic modulator of embodiment 23, wherein the second source electrode extends along the first direction, and has a first side and a second side that are opposite to each other along the second direction, and wherein the first source electrode comprises: a first part on the first side that is coupled to the first modulation waveguide and the first aligned waveguide, a second part on the second side that is coupled to the second modulation waveguide and the second aligned waveguide, and a third part on the second side that is coupled to the first inverted waveguide, wherein the first part and the second part are opposite to each other along the second direction, and the second part and the third part are spaced from each other along the first direction.
25. The electro-optic modulator of embodiment 24, wherein the first ground electrode and the second ground electrode are commonly coupled to a ground, and wherein the first source electrode is configured to be biased by a first bias voltage relative to the ground, and the second source electrode is configured to be biased by a second bias voltage relative to the ground, and wherein the first bias voltage and the second bias voltage are equal in value but alternative in polarity.
26. The electro-optic modulator of any one of embodiments 22 to 25, wherein the first modulation waveguide extends along a first direction, wherein the first ground electrode, the first source electrode, the second source electrode, and the second ground electrode are arranged sequentially along a second direction intersecting along the first direction, wherein at least one of the first ground electrode, the first source electrode, the second source electrode, or the second ground electrode has an electrode structure formed over a corresponding waveguide along a third direction perpendicular to the first direction and the second direction, and wherein the electrode structure comprises one or more layers of electrodes, at least one of the one or more layers of electrodes having a T-rail structure, or a corrugated or periodically loaded structure.
27. The electro-optic modulator of any one of embodiments 1 to 26, wherein, along a first optical path of the first guided light, an effective length of the first aligned waveguide is identical to an effective length of the first inverted waveguide, and wherein, along a second optical path of the second guided light, an effective length of the second aligned waveguide is identical to an effective length of the second inverted waveguide.
28. The electro-optic modulator of embodiment 27, wherein at least one of the first aligned waveguide or the first inverted waveguide comprises two or more separated sub-waveguides, and wherein adjacent sub-waveguides are parallel to each other and connected by a curved waveguide connector.
29. The electro-optic modulator of embodiment 27 or 28, wherein a first layout of first waveguides along the first optical path is symmetrical or asymmetrical to a second layout of second waveguides along the second optical path.
30. The electro-optic modulator of any one of embodiments 1 to 29, wherein the first modulation waveguide and the first aligned waveguide are a single waveguide with the first aligned waveguide as an end.
31. The electro-optic modulator of any one of embodiments 1 to 30, wherein each of the first modulation waveguide, the second modulation waveguide, the first aligned waveguide, and the first inverted waveguide comprises a ridge structure formed in a Thin-Film Lithium Niobate (TFLN) layer.
32. The electro-optic modulator of any one of embodiments 1 to 31, further comprising: an optical splitter coupled to the first modulation waveguide and the second modulation waveguide, wherein the optical splitter is configured to split an input light into the first guided light and the second guided light and transmit the first guided light into the first modulation waveguide and the second guided light into the second modulation waveguide; and an optical combiner configured to combine the first guided light and the second guided light transmitted through the modulation section and the booster section to generate an output guided light.
33. The electro-optic modulator of embodiment 32, wherein the booster section comprises one or more boosters that are arranged in series, and wherein each of the one or more boosters is configured to increase a response bandwidth of the output guided light.
34. The electro-optic modulator of embodiment 32 or 33, wherein the electro-optic modulator is configured such that the output guided light comprises an optical signal modulated in magnitude with one modulation format selected from a group of non-return-to-zero (NRZ), PAM4, PAM8, PAM16, PAM 64, BPSK, QPSK, DPSK, DQPSK, 8QAM, 16QAM, and 64QAM.
35. An electro-optic modulator, comprising: a modulation section configured to modulate a first guided light by a first electrical field and a second guided light by a second electrical field; and a booster section coupled to the modulation section and configured to: generate a first positive phase modulation for the first guided light by the first electrical field, generate a first negative phase modulation for the first guided light by a third electrical field, generate a second positive phase modulation for the second guided light by the second electrical field, and generate a second negative phase modulation for the second guided light by a fourth electrical field, wherein the booster section is configured to cause at least one of the third electrical field being different from the second electrical field or the fourth electrical field being different from the first electrical field.
36. A system, comprising: an optical source configured to provide an optical signal; and an electro-optic (EO) modulator coupled to the optical source, wherein the EO modulator is the EO modulator according to any one of embodiments 1 to 35.
37. A method for forming the EO modulator according to any one of embodiments 1 to 35.
38. A method for operating the EO modulator according to any one of embodiments 1 to 35.

While this specification contains many specific implementation details, these should not be construed as limitations on the scope of any invention or of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In certain implementations, multitasking and parallel processing may be advantageous.

## Claims

1. An electro-optic modulator, comprising:
a modulation section comprising a first modulation waveguide and a second modulation waveguide, the first modulation waveguide being configured to modulate first guided light by a first electrical field during operation of the electro-optic modulator and the second modulation waveguide being configured to modulate second guided light by a second electrical field during operation of the electro-optic modulator; and
a booster section coupled to the modulation section, wherein a booster of the booster section comprises:
a first aligned waveguide configured to generate a first positive phase modulation for the first guided light by the first electrical field,
a first inverted waveguide configured to generate a first negative phase modulation for the first guided light by a third electrical field,
a second aligned waveguide configured to generate a second positive phase modulation for the second guided light by the second electrical field, and
a second inverted waveguide configured to generate a second negative phase modulation for the second guided light by a fourth electrical field,
wherein the booster is configured to cause, during operation of the electro-optic modulator, at least one of the third electrical field to be different from the second electrical field or the fourth electrical field to be different from the first electrical field, and
wherein the first modulation waveguide, the second modulation waveguide, the first aligned waveguide and the first inverted waveguide, and the second aligned waveguide and the second inverted waveguide, comprise an electro-optic (EO) material.

2. The electro-optic modulator of claim 1, wherein the modulation section is configured to provide a modulation strength with a switching voltage Vπ, and
wherein the booster section is configured to provide substantially no gain at lower frequencies and positive gains at higher frequencies to enhance an overall EO bandwidth of the electro-optic modulator, without sacrificing the switching voltage Vπ.

3. The electro-optic modulator of any one of claims 1 or 2, wherein the booster further comprises:
a first conversion waveguide optically coupled between the first aligned waveguide and the first inverted waveguide and configured to transmit the first light beam from the first aligned waveguide to the first inverted waveguide, and
a second conversion waveguide optically coupled between the second aligned waveguide and the second inverted waveguide and configured to transmit the second guided light from the second aligned waveguide to the second inverted waveguide.

4. The electro-optic modulator of claim 3, wherein at least one of the first conversion waveguide or the second conversion waveguide is configured to tune an optical delay of a corresponding guided light for velocity matching between the corresponding guided light along a corresponding waveguide and an electrical signal traveling along one or more electrodes adjacent to the corresponding waveguide; optionally
wherein the one or more electrodes are configured to simultaneously velocity-match the electrical signal to the corresponding guided light and provide a characteristic impedance matched to an external electrical source.

5. The electro-optic modulator of any one of claims 3 or 4, wherein a sum of the first positive phase modulation and the first negative phase modulation is substantially identical to zero at a lower frequency and is greater than zero at a higher frequency, and
wherein a sum of the second positive phase modulation and the second negative phase modulation is substantially identical to zero at the lower frequency and is greater than zero at the higher frequency; and/or
wherein at least one of the first conversion waveguide or the second conversion waveguide comprises a waveguide material different from the electro-optic material.

6. The electro-optic modulator of any one of claims 3 to 5, wherein the first aligned waveguide and the first inverted waveguide extend along a first direction, and are offset along a second direction intersecting with the first direction, and wherein the first conversion waveguide extends along a curved path from the first aligned waveguide to the first inverted waveguide, and
wherein the first conversion waveguide comprises:
a first tapered end extending along the direction opposite to the first direction, and
a second tapered end extending along the first direction, and
wherein the first aligned waveguide has a third tapered end extending along the first direction and being over the first tapered end of the first conversion waveguide along a third direction perpendicular to the first direction and the second direction, and the first inverted waveguide has a fourth tapered end extending along the direction opposite to the first direction and being over the second tapered end of the first conversion waveguide along the third direction.

7. The electro-optic modulator of any one of claims 1 to 6, comprising:
a first ground electrode;
a first source electrode;
a second ground electrode;
a second source electrode; and
a third ground electrode,
wherein the first ground electrode and the first source electrode are configured to be biased to generate the first electrical field, and are respectively coupled to opposite sides of the first modulation waveguide and respectively coupled to opposite sides of the first aligned waveguide,
wherein the first source electrode and the third ground electrode are configured to be biased to generate the third electrical field, and are respectively coupled to opposite sides of the first inverted waveguide,
wherein the second ground electrode and the second source electrode are configured to be biased to generate the second electrical field, and are respectively coupled to opposite sides of the second modulation waveguide and respectively coupled to opposite sides of the second aligned waveguide, and
wherein the second source electrode and the third ground electrode are configured to be biased to generate the fourth electrical field, and are respectively coupled to opposite sides of the second inverted waveguide.

8. The electro-optic modulator of claim 7, wherein the first ground electrode, the second ground electrode, and the third ground electrode are commonly coupled to a ground, and
wherein the first source electrode is configured to be biased by a first bias voltage relative to the ground, and the second source electrode is configured to be biased by a second bias voltage relative to the ground, and wherein the first bias voltage and the second bias voltage are equal in value but alternative in polarity.

9. The electro-optic modulator of any one of claims 7 or 8, wherein the first modulation waveguide extends along a first direction,
wherein the first ground electrode, the first source electrode, the second ground electrode, the second source electrode, and the third ground electrode are sequentially arranged along a second direction intersecting along the first direction, and
wherein at least one of the first ground electrode, the first source electrode, the second ground electrode, the second source electrode, or the third ground electrode has an electrode structure formed over a corresponding waveguide along a third direction perpendicular to the first direction and the second direction; optionally
wherein the electrode structure comprises multiple layers of metal electrodes coupled together through conductive vias along the third direction, and
wherein at least one of the multiple layers of metal electrodes comprises: a T-rail structure, or a corrugated or periodically loaded structure.

10. The electro-optic modulator of any one of claims 1 to 6, comprising:
a first ground electrode;
a first source electrode;
a second source electrode; and
a second ground electrode,
wherein the first ground electrode and the first source electrode are configured to be biased to generate the first electrical field, and are respectively coupled to opposite sides of the first modulation waveguide and respectively coupled to opposite sides of the first aligned waveguide,
wherein the first source electrode and the second source electrode are configured to be biased to generate the third electrical field, and are respectively coupled to opposite sides of the first inverted waveguide,
wherein the first source electrode and the second source electrode are configured to be biased to generate the second electrical field, and are respectively coupled to opposite sides of the second modulation waveguide and respectively coupled to opposite sides of the second aligned waveguide, and
wherein the second source electrode and the third ground electrode are configured to be biased to generate the fourth electrical field, and are respectively coupled to opposite sides of the second inverted waveguide.

11. The electro-optic modulator of claim 10, wherein the first source electrode extends along a first direction, and has a first side and a second side that are opposite to each other along a second direction perpendicular to the first direction, and
wherein the first source electrode comprises
a first part on the first side that is coupled to the first modulation waveguide and the first aligned waveguide,
a second part on the second side that is coupled to the second modulation waveguide and the second aligned waveguide, and
a third part on the second side that is coupled to the first inverted waveguide,
wherein the first part and the second part are opposite to each other along the second direction, and the second part and the third part are spaced from each other along the first direction; optionally
wherein the first ground electrode and the second ground electrode are commonly coupled to a ground, and
wherein the first source electrode is configured to be biased by a first bias voltage relative to the ground, and the second source electrode is configured to be biased by a second bias voltage relative to the ground, and wherein the first bias voltage and the second bias voltage are equal in value but alternative in polarity.

12. The electro-optic modulator of any one of claims 10 or 11, wherein the first modulation waveguide extends along a first direction,
wherein the first ground electrode, the first source electrode, the second source electrode, and the second ground electrode are arranged sequentially along a second direction intersecting along the first direction,
wherein at least one of the first ground electrode, the first source electrode, the second source electrode, or the second ground electrode has an electrode structure formed over a corresponding waveguide along a third direction perpendicular to the first direction and the second direction, and
wherein the electrode structure comprises one or more layers of electrodes, at least one of the one or more layers of electrodes having a T-rail structure, or a corrugated or periodically loaded structure.

13. The electro-optic modulator of any one of claims 1 to 12, wherein, along a first optical path of the first guided light, an effective length of the first aligned waveguide is identical to an effective length of the first inverted waveguide, and
wherein, along a second optical path of the second guided light, an effective length of the second aligned waveguide is identical to an effective length of the second inverted waveguide; optionally
wherein at least one of the first aligned waveguide or the first inverted waveguide comprises two or more separated sub-waveguides, and wherein adjacent sub-waveguides are parallel to each other and connected by a curved waveguide connector.

14. The electro-optic modulator of any one of claims 1 to 13, further comprising:
an optical splitter coupled to the first modulation waveguide and the second modulation waveguide, wherein the optical splitter is configured to split an input light into the first guided light and the second guided light and transmit the first guided light into the first modulation waveguide and the second guided light into the second modulation waveguide; and
an optical combiner configured to combine the first guided light and the second guided light transmitted through the modulation section and the booster section to generate an output guided light,
wherein the booster section comprises one or more boosters that are arranged in series, and each of the one or more boosters is configured to increase a response bandwidth of the output guided light.

15. An electro-optic modulator, comprising:
a modulation section configured to modulate a first guided light by a first electrical field and a second guided light by a second electrical field; and
a booster section coupled to the modulation section and configured to:
generate a first positive phase modulation for the first guided light by the first electrical field,
generate a first negative phase modulation for the first guided light by a third electrical field,
generate a second positive phase modulation for the second guided light by the second electrical field, and
generate a second negative phase modulation for the second guided light by a fourth electrical field,
wherein the booster section is configured to cause at least one of the third electrical field being different from the second electrical field or the fourth electrical field being different from the first electrical field.
